# EUROPÄISCHE PATENTSCHRIFT

(11) **EP 1 559 663 B1**
(45) Veröffentlichungstag und Bekanntmachung des Hinweises auf die Patenterteilung: **29.10.2008**
(21) Anmeldenummer: 05001533.8
(22) Anmeldetag: 26.01.2005
(51) Int. Cl.: B65G 15/10, B29C 49/42, B65G 47/84

(54) **Verfahren und Fördervorrichtung zur Förderung von mit einem Kragen versehenen Gegenständen**
Process and conveyor for transporting articles which have a collar
Procédé et convoyeur destiné au transport d'objets munis d'un col

(30) Priorität: 28.01.2004 CH 1202004
(43) Veröffentlichungstag der Anmeldung: 03.08.2005
(73) Patentinhaber: Ferag AG, 8340 Hinwil (CH)
(72) Erfinder: Feusi, Raphael, 8592 Uttwill (CH)
(74) Vertreter: Rentsch, Rudolf A.

(56) Entgegenhaltungen:
- EP-A- 0 452 857
- EP-A- 0 466 278
- EP-A- 0 842 875
- WO-A-01/42113
- WO-A-96/20122
- WO-A-03/086918
- US-A- 4 223 778
- US-A- 4 724 035
- US-A- 5 501 552
- US-A1- 2003 093 972
- US-A1- 2003 106 779
- US-B1- 6 446 781

## Beschreibung

Die Erfindung betrifft eine Fördervorrichtung gemäss den Merkmalen des Oberbegriffs des Patentanspruchs 6 sowie ein Verfahren zum Fördern von Gegenständen gemäss den Merkmalen des Oberbegriffs des Patentanspruches 1.

Es ist bekannt Preforms von PET-Flaschen, welche einen Kragen besitzen, zu Transportzwecken aufgehängt an diesem Kragen zu befördern und zwar insbesondere unter Ausnutzung der Schwerkraft. Hierfür werden die Preforms an ihren Kragen zwischen zwei parallel nebeneinander geführte, die Transportstrecke beschreibende Schienen gehängt, so dass jeweils ein Teil der Schienen als Abstützung den Kragen seitlich untergreift. Die Schienen sind so geneigt, dass die Preforms aufgrund ihrer Schwerkraft die Schienen hinabrutschen. Die Oberflächen der Schienen sind in dem Bereich, in dem sie die Kragen aufnehmen entsprechend präpariert, so dass die Preforms ohne weiteres darauf gleiten können und weder die Schienen noch die Preforms einen grossen Abrieb erfahren. In solchen Schienenfördervorrichtungen werden die zu transportierenden Gegenstände in einem ungeordneten, losen Strom gefördert. Für die Bearbeitung, wie z.B. für das Erwärmen und Aufblasen der Preforms zu PET-Flaschen, müssen die Preforms aber in definierten Abständen zueinander gefördert werden. Vor dem Eintakten der zu transportierenden Gegenstände von der Schienenfördervorrichtung in eine Fördervorrichtung, in der die Preforms mit einem definierten Abstand zueinander gefördert werden, erfordert in der Regel ein Aufstauen der Preforms unter entsprechendem Staudruck. Um genügend grosse Durchsatzmengen mit solchen Schienenfördervorrichtungen realisieren zu können, und damit der Staudruck für die Abgabe aus der Schienenfördervorrichtung z.B. in ein Sternrad, gross genug ist, müssen die Schienen wenigstens eine Steigung von etwa 20% bis 30% aufweisen, was eine entsprechende Bauhöhe erfordert.

Um das Problem mit der Bauhöhe zu umgehen, sind Vorschläge gemacht worden, über den Schienen einen Luftströmungskanal einzurichten, der etwa den Querschnitt des über den Kragen hinausragenden Kopfes der Preforms hat. Neben Preforms können auch andere Gegenstände, die oberhalb ihres Schwerpunktes einen Kragen aufweisen, insbesondere auch Flaschen, auf solchen mit Luftströmungskanälen ausgerüsteten Schienenfördervorrichtungen mit Druckluft gefördert werden, wie dies beispielsweise in US5501552 und WO03/086918 beschrieben ist. In dem Luftströmungskanal sind Düsen derart angeordnet, dass die einströmende Druckluft in einem möglichst optimalen Winkel auf die Köpfe trifft und die zu transportierenden Gegenstände in die gewünschte Richtung die Schienen in losen ungeordneten Strömen, entlang treibt. Auch hier müssen die Schienen entsprechend gleitfähig präpariert werden wie dies in WO03/086918 gezeigt ist.

Das Eintakten aus solchen losen, ungeordneten Strömen von geförderten Gegenständen in einen stromabwärts gelegenen Förderstrom mit Hilfe eines Sternrades, ist z.B. in WO03/086918 oder US5501552 beschrieben. Ein Sternrad weist zum Fortbewegen der Gegenstände eine kreisförmige Sternplatte mit über dem Umfang gleichmässig verteilten Fingern auf. Sie wird um ihre Kreisachse rotierend angetrieben, wobei ihre Finger unter den Kragen und zwischen die Gegenstände eingreifen und sie z.B. aus einem Stauabschnitt einer Förderstrecke abziehen. Die zu transportierenden Gegenstände werden dabei in zwischen den Fingern liegenden Aussparungen geschoben und mit ihren Kragen auf dem Rand der Sternplatte hängend im Kreis transportiert. In der Regel verhindert eine sich am Umfang der Sternplatte erstreckende Stützkulisse das Herausfallen der Gegenstände aus dem Sternrad. Wie in US 4724035 gezeigt, kann das Sternrad auch als Arbeitsstation genutzt werden und Gegenstände aus verschiedenen Transportstrecken können in dem Sternrad miteinander verarbeitet werden.

Einen etwas kontrollierteren Transport als mit den Schienenfördervorrichtungen erlauben Fördervorrichtungen mit Endlosbändern, die parallel zur Transportstrecke umlaufen, wie dies in EP0466278 beschrieben ist. Um ein Schwingen der Flaschen in Transportrichtung zu verhindern, ist in EP0466278 vorgeschlagen worden, den Abstand zwischen den Förderbändern geringer zu wählen, als den äusseren Durchmesser des Flaschenhalses unter dem Kragen, so dass die Flaschen nicht primär abgestützt auf dem Förderbändern hängend gefördert werden, sondern eingeklemmt zwischen den Bändern. Zwischen zwei Teilstrecken mit solchen klemmenden Endlosbändern sind für die Übergabe der zu transportierenden Gegenstände Übergabestationen vorgesehen, in denen Endlosbänder statt unterhalb des Kragens oberhalb des Kragens im Bereich des Flaschenkopfes klemmend an diesem angreifen. Die Flaschen werden somit auch im Übergabebereich ausschliesslich klemmend zwischen zwei Endlosbändern hängend transportiert. Um auch in diesem Bereich ein Schwingen zu vermeiden sind zur Stabilisierung seitlich oder am Boden der Flaschen Führungsschienen oder mitlaufende Führungsbänder vorgesehen.

Eine weitere Möglichkeit um das Schwingen der Flaschen zu verhindern, ist in WO 9620122 vorgeschlagen. Die hier verwendeten parallel geführten Endlosbänder weisen einander gegenüberliegende Nuten auf, in die der Rand des Kragens eingespannt wird. Die Übergabe an und von einer derart ausgestatteten Teilstrecke einer Fördervorrichtung ist aber schwierig zu bewerkstelligen und die angestrebten Durchsatzzahlen von 50'000 Flaschen pro Stunde und mehr lassen sich mit einer solchen Vorrichtung kaum erreichen. Ausserdem ist eine solche Anlage nur für eine einzige Kragendicke einsetzbar und insofern unflexibel.

Im Unterschied zu WO 9620122 weist die in WO 0142113 A1 offenbarte Vorrichtung ein an einer Zuführstrecke angeordnetes, rotierendes Zuführrad auf, welches zum kraftschlüssigen Erfassen der Flaschenkragen umfangsseitig mit einer umlaufenden Nut in Negativform zur Kragenform der Flaschenkragen ausgestattet ist. Auf der dem Zuführrad gegenüberliegenden Seite der Zuführstrecke verhindert eine stationäre Stützkulisse, dass die Gegenstände aus der Zuführstrecke herausfallen und im Wirkbereich des Zuführrades bleiben.

Die EP-A-0452857 offenbart eine Vorrichtung zum Ausrichten und Fördern von zylindrischen Gegenständen mit Kragen an einen Wegförderer. Diese Gegenstände werden von einem Behälter einer Fördereinrichtung zugeführt, welche nicht oder leicht elastische Bänder aufweist, auf denen die Gegenstände mit ihren Kragen während dem Fördervorgang aufliegen. Bei einem Stau am Wegförderer oder in der Förderstrecke rutschen die Bänder unter den Kragen der aufgestauten Gegenstände durch.

Einen flexibleren Weg beschreitet EP0842875. Statt den Rand des Kragens nur von den Seiten her in die Nuten parallel nebeneinander geführter Endlosbänder einzuspannen, werden die Kragen der Flaschen auf jeder Seite der Transportstrecke zwischen zwei übereinander angeordneten Endlosbändern eingeklemmt, so dass also pro Streckenabschnitt insgesamt mit vier Endlosbändern gearbeitet wird. Die Bänder lassen sich sowohl betreffend den Durchmesser des Flaschenhalses als auch in Bezug auf die Kragendicke passend einstellen. Bei Bedarf ist es ausserdem möglich durch unterschiedliche Geschwindigkeiten der jeweils in der Transportbahn nebeneinander liegenden Bänder, eine Rotation der Flaschen zu bewirken. Ein Überlappen mit dem Eingangsbereich der nachfolgenden Transport- oder Arbeitsstation soll zudem eine geordnete Übergabe gewährleisten. Die Arbeit mit vier Endlosbändern ist allerdings aufwendig und vergleichsweise teuer.

Den beschriebenen Fördervorrichtungen mit Endlosbändern ist gemeinsam, dass die Endlosbänder eine Klemmwirkung auf den zu transportierenden Gegenstand ausüben und die Flaschen mit der Fördergeschwindigkeit der Förderbänder gefördert werden. Wie bei den Schienenfördervorrichtungen handelt es sich auch hier um einen eher ungeordneten Strom geförderter Gegenstände, deren Abstand zueinander nicht genau definiert ist. Für das Eintakten in eine andere Förderstrecke müssen die Gegenstände auch hier in der Regel gestaut und mit einem entsprechenden Staudruck beaufschlagt werden. Dies ist auch bei den Fördervorrichtungen mit Endlosbändern nicht ohne Probleme möglich, da die Flaschen zum Stauen in der Regel von den Endlosbändern entweder aufgehängt an ihren Kragen an einen parallelen Schienenstrang oder stehend an ein unter dem Flaschenboden angeordneten Förderband abgegeben werden. Um Unregelmässigkeiten in der Zuführgeschwindigkeit und allenfalls auch beim Abziehen der Gegenstände im Übergabebereich begegnen zu können, benötigt man relativ lange Staustrecken. Die Länge dieser Staustrecken ist vordefiniert und der Staudruck aufgrund der Länge der Strecke und ihres unregelmässigen Füllungsgrades kaum einstellbar. Das Eintakten aus dem Stauraum in eine getaktete Förderstrecke ist somit auch bei Fördervorrichtungen mit Endlosbändern nur wenig zufrieden stellend gelöst. Insbesondere bei der Übergabe an ein Sternrad kommt es aufgrund des Wechsels der Transportrichtung ausserdem zu einem unkontrollierten Schwingen der zu transportierenden Gegenstände, was zusammen mit dem kaum einstellbaren Staudruck zum Verkannten und somit zu Transportblockaden führen kann.

Aufgabe der Erfindung ist es daher ein Verfahren und eine Fördervorrichtung für den hängenden Transport von mit einem ringförmigen Kragen ausgestatteten Gegenständen vorzuschlagen, die eine kontrollierte Übergabe der Gegenstände zwischen Transportabschnitten ermöglichen, die unterschiedlich getaktet sind, bzw. von einem Transportabschnitt mit ungeordnetem losem Strom auf einen Transportabschnitt mit einer bestimmten Teilung bzw. einem bestimmten Takt. Weiter sollen das Verfahren und die Vorrichtung ermöglichen, dass die Gegenstände problemlos in einem Stauabschnitt einer Förderstrecke gestaut werden können. Eine weitere Aufgabe ist es, derart gestaute Gegenstände mit einem definierten Staudruck an eine stromab angeordnete Fördervorrichtung zu übergeben.

Diese Aufgabe wird gelöst durch ein Verfahren gemäss Anspruch 1 und eine Fördervorrichtung gemäss Anspruch 6.

Bei dem vorgeschlagenen Verfahren kommt ein umlaufendes Endlosfördermittel zum Einsatz, das eine Förderstrecke beschreibt und mit dessen Hilfe Gegenstände mit einem ringförmigen oberhalb ihres Schwerpunktes angeordneten Kragen transportiert werden. Bei dem erfindungsgemässen Verfahren, werden die zu transportierenden Gegenstände mindestens auf einem Abschnitt, dem so genannten Stauabschnitt, der Förderstrecke wenigstens an einer Seite ihres Kragens an dem umlaufenden Endlosfördermittel aufgehängt und gegen die Schwerkraft abgestützt. Die Gegenstände werden in diesem Stauabschnitt allein aufgrund der zwischen Endlosfördermittel und Kragen bestehenden Reibkraft von dem Endlosfördermittel fortbewegt, wobei die Reibkraft derart bemessen ist, dass bei einem entsprechenden, gegen die Transportrichtung auf den zu transportierenden Gegenstand einwirkenden Widerstand, das Endlosfördermittel unter dem Kragen des zu transportierenden Gegenstandes durchrutscht. Mit einem solchen Verfahren lassen sich die zu transportierenden Gegenstände einfach und besser kontrolliert aufstauen.

Die Reibkraft zwischen Kragen und Endlosfördermittel kann eingestellt werden. Dies kann geschehen, indem man insbesondere die Materialien des wenigstens einen Endlosfördermittels auf das Material des für den Transport auf dem Endlosfördermittel aufliegenden Kragens des zu transportierenden Gegenstandes abstimmt. Ein ähnlicher Effekt kann erzielt werden, wenn man ein Endlosfördermittel mit einer auf den Kragen abgestimmten Beschichtung wählt oder auch indem die Kragen der zu transportierenden Gegenstände entsprechend beschichtet werden. Die Beschichtung der Kragen kann dabei zum Beispiel auch temporär und/oder beschränkt auf deren Unterseite erfolgen. Eine andere Möglichkeit die Reibkraft zwischen Kragen und Endlosfördermittel einzustellen besteht darin, den Steigungswinkel der Förderstrecke zu variieren. Mit dem Steigungswinkel der Förderstrecke ändert sich die Grösse der Fläche mit der der Kragen auf dem Endlosfördermittel aufliegt wodurch auch die auftretende Reibkraft variiert. Über die Reibkraft zwischen Kragen und Endlosfördermittel ist es möglich, die Grösse der Kraft mitzubestimmen, die entgegen der Transportrichtung wirken muss, damit es zu einem Durchrutschen des Endlosfördermittels unter dem Kragen kommt.

Sollen die zu transportierenden Gegenstände gestaut werden, damit sie kontinuierlich an eine stromab sich anschliessendes Förderorgan der erfindungsgemässen Fördervorrichtung übergeben werden können, ist es sehr vorteilhaft die Geschwindigkeit des wenigstens einen Endlosfördermittels höher einzustellen als die Geschwindigkeit, mit der die Gegenstände im Übergabebereich von der anschliessenden Fördervorrichtung abgezogen werden. Auf diese Weise lassen sich nämlich die zu transportierenden Gegenstände im Stauabschnitt stauen und mit einem Staudruck beaufschlagen. Die im Stauabschnitt gestauten Gegenstände besetzen dann die so genannte Staustrecke.

Das Verfahren ist vorteilhaft so gestaltet, dass die Länge des durch gestaute Gegenstände besetzten Stauabschnittes, also die Staustrecke, etwa konstant ist. Dies geschieht am einfachsten, indem man die Geschwindigkeit des wenigstens einen Endlosfördermittels einstellt. Unter Umständen kann auch die Differenzgeschwindigkeit zwischen Abzugsgeschwindigkeit und Geschwindigkeit des wenigstens einen Endlosfördermittels als der einzustellende Parameter für die Regulierung des Staudrucks herangezogen werden.

Die Geschwindigkeit des wenigstens einen Endlosfördermittels und/oder die Länge der Staustrecke, gegebenenfalls auch die Differenzgeschwindigkeit, lassen sich am einfachsten mit Hilfe eines Regelkreises regulieren. Hierfür werden besonders vorteilhaft die Geschwindigkeit des wenigstens einen Endlosfördermittels, die Abzugsgeschwindigkeit oder die Länge der Staustrecke erfasst. Es können auch zwei oder alle drei der genannten Parameter erfasst werden. Die Erfassung erfolgt am einfachsten mit Hilfe von Sensoren und am besten kontinuierlich, um einen möglichst störungsfreien Betrieb zu gewährleisten.

Werden die Gegenstände bei der Übergabe auf das stromab sich anschliessende Förderorgan mit Druckluft beaufschlagt, können sie in ihrer Position durch die Druckluft stabilisiert und es kann ein Schwingen der Gegenstände verhindert werden, wodurch eine kontrolliertere Übergabe möglich ist.

Die erfindungsgemässe Fördervorrichtung weist ein umlaufendes, mittels Antriebsorganen angetriebenes Endlosfördermittel zur Förderung von mit einem Kragen versehenen Gegenständen auf. Das Endlosfördermittel und die Antriebsorgane sind so aufeinander abgestimmt, dass ein Durchrutschen des Endlosfördermittels auf dem Antriebsorgan unter Last verhindert wird. In einem als Stauabschnitt bezeichneten Abschnitt einer durch das Endlosfördermittel beschriebenen Förderstrecke, sind die zu fördernden Gegenstände, ohne dass klemmend auf sie eingewirkt wird, auf ihrer einen Seite durch das Endlosfördermittel und auf der anderen Seite durch eine im wesentlichen parallel zum Endlosfördermittel sich erstreckende Stützeinrichtung gegen die Schwerkraft abgestützt, an ihren Kragen hängend transportierbar. Hierdurch ist es möglich den zu transportierenden Gegenständen z.B. durch Einbringen eines Stoppelementes, die zu transportierenden Gegenstände im Staubschnitt der Förderstrecke zu stauen.

Die Fördervorrichtung für ein Eintakten in eine weiter stromab angeordnete Fördervorrichtung weist ein Sternrad als Förderorgan auf, welches zwei auf einer gemeinsamen Drehachse in Distanz zueinander angeordneten und parallel auf die zu transportierenden Gegenstände einwirkende Sternplatten aufweist. Die obere der beiden Sternplatten untergreift mit ihren Fingern die Kragen der zu transportierenden Gegenstände und transportiert diese am Kragen hängend, während die zweite Sternplatte gleichzeitig, vorzugsweise im unteren Drittel der zu transportierenden Gegenstände, seitlich an diesen angreift und so ein unkontrolliertes Schwingen beim Richtungswechsal verhindert. Die Distanz zwischen den Sternplatten ist vorzugsweise einstellbar, so dass sie auf die unterschiedlichen Gegenstände angepasst werden kann. Ausserdem sind die Sternplatten vorzugsweise auswechselbar. So dass in Abstimmung mit den zu transportierenden Gegenständen die Sternplatten mit den passenden Konturen eingesetzt werden können.

Die Sternplatten sind mit über den Umfang gleichmässig verteilen, nach aussen abstehenden Fingern versehen, die über bogenförmige Taschen zur Aufnahme der zu transportierenden Gegenstände bildende Aussparungen miteinander verbunden sind. In einer besonders vorteilhaften Ausführungsform weist die in Transportrichtung zeigende bogenförmige Kante jedes Fingers einen engeren Radius auf als die nachlaufende Kante jedes Fingers, wobei die Radien fliessend ineinander übergehen. Hierdurch ist es möglich die zu transportierenden Gegenstände senkrecht auf das Sternrad zuzufördern bzw. senkrecht vor dem Sternrad aufzustauen oder aber auch tangential oder in einem beliebigen Winkel dazwischen.

Ist im Anschluss an das Sternrad eine Fördervorrichtung mit einem Fördermittel vorgesehen, in welche die Gegenstände aus dem Sternrad heraus eingetaktet werden sollen, so ist es vorteilhaft, wenn das Sternrad zur Synchronisierung des Antriebs mit dem Fördermittel der sich stromab anschliessenden Fördervorrichtung wirkverbunden ist. Eine solche Lösung kann aber natürlich auch für ein herkömmliches Sternrad mit nur einer Sternplatte vorgesehen werden.

Das Nachrüsten von bestehenden Anlagen allein mit dem beschriebenen Sternrad erlaubt bereits eine verbesserte Vereinzelung der zu transportierenden Gegenstände.

Das Antriebsorgan für das Endlosfördermittel der erfindungsgemässen Fördervorrichtung kann in bekannter Weise, in Form einer oder auch zweier synchron angetriebener Antriebsrollen, ausgebildet sein. Zur Vermeidung des Durchrutschens des Endlosfördermittels auf dem Antriebsorgan kann das Endlosfördermittel aus einem entsprechend auf das Material des Antriebsorgans abgestimmten Material bestehen und oder das Endlosfördermittel und/oder das Antriebsorgan können eine aufeinander abgestimmte Beschichtung aufweisen. Denkbar sind z.B. Antriebsrollen aus Metall mit einem Endlosfördermittel aus einem auf das Metall abgestimmten Gummi oder einer Gummimischung. Wobei abhängig vom Metall sowohl Naturkautschuk als auch industriell hergestellter Gummi zum Einsatz kommen können. Als Metalle können auf Aluminium basierende Legierungen, Stahl und die anderen bekanntermassen für solche Zwecke eingesetzten Legierungen verwendet werden. Eine andere Möglichkeit ein Durchrutschen des Endlosfördermittels zu verhindern besteht darin das Endlosfördermittel als Gliederkette und das Antriebsorgan als ein mit der Gliederkette kämmendes Förderrad auszugestalten. Besonders vorteilhaft ist es hierbei wenn die Gliederkette seitlich in Richtung der Kragen hervorstehende Tragelemente aufweist, die aus dem entsprechenden Material hergestellt und/oder mit einer entsprechenden Beschichtung versehen sind.

Die Fördervorrichtung kann sehr flexibel auf der dem Endlosfördermittel gegenüberliegenden Seite mit einer Stützeinrichtung versehen sein, die durch eine oder mehrere hintereinander angeordnete Stützschienen und/oder durch wenigstens ein weiteres Endlosfördermittel gebildet ist. Die Stützschienen sind dabei vorteilhaft so angeordnet, dass sie wie das Endlosfördermittel den Kragen der zu transportierenden Gegenstände untergreifen. Sie können aber auch oberhalb des Kopfes angreifen und diesen nur seitlich abstützen. Werden ein oder mehrere hintereinander angeordnete Endlosfördermittel als Stützeinrichtung vorgesehen oder Stützschienen und Endlosfördermittel gemischt so ist es sinnvoll, wenn das oder die verwendeten Endlosfördermittel analog zum ersten Endlosfördermittel ausgebildet sind, um eine auf beiden Seiten analoge Transport bzw. Durchrutschgeschwindigkeit des oder der Endlosfördermittel zu erhalten. Auch die als Stützeinrichtung vorgesehenen Stützschienen sollten in ihrem als Stütze dienenden Bereich einen auf die Eigenschaften des Endlosfördermittels abgestimmten Reibungskoeffizient mit Bezug auf die Kragen der zu transportierenden Gegenstände haben, so dass das angestrebte Stauen und Transportieren der Gegenstände nicht beeinträchtigt wird.

Ist die Distanz zwischen dem Endlosfördermittel und der Stützeinrichtung einstellbar, so lassen sich mit der Fördervorrichtung Gegenstände mit unterschiedlichen Durchmessern im Bereich ihres Kragens durch die Fördervorrichtung transportieren und stauen. Ist der Abstand zwischen dem ersten Endlosfördermittel und der Stützeinrichtung über die durch das Endlosfördermittel beschriebene Förderstrecke abschnittsweise einstellbar, so kann in vorzugsweise stromaufwärts liegenden Bereichen die Distanz etwas kleiner gewählt werden als der Durchmesser im Bereich des Kragens, so dass in diesem Bereich ein Durchrutschen des Endlosfördermittels aufgrund einer seitlich auf die zu fördernden Gegenstände aufgebrachten Klemmwirkung nicht möglich ist. In vorzugsweise stromabwärts gelegenen Abschnitten wird dagegen der Abstand zwischen dem ersten Endlosfördermittel und der Stützeinrichtung so gewählt, dass der Durchmesser der zu transportierenden Gegenstände kleiner als dieser Abstand ist. Die Klemmwirkung fällt somit weg und die Gegenstände werden nur noch aufgrund der Reibungskraft zwischen Endlosfördermittel und Kragen transportiert. Bei einem genügend grossen Widerstand gegen den Transport in Förderrichtung rutscht in diesem Bereich das Endlosfördermittel unter dem Kragen durch und die Gegenstände werden gestaut. Der Widerstand kann dabei beispielsweise durch ein Stoppelement oder auch durch eine stromab sich anschliessende Fördervorrichtung oder ein weiteres zur erfindungsgemässen Fördervorrichtung gehörendes Förderorgan hervorgerufen sein, in welche(s) die zu transportierenden Gegenstände nur unter entsprechendem Staudruck übergeben werden können. Eine so ausgestaltete Fördervorrichtung ist deswegen so besonders vorteilhaft, weil die Länge des Stauabschnittes einstellbar ist und auch ein Transportabschnitt, in dem kein Stauen möglich ist, in variabler Länge vorgesehen sein kann. Der Stauabschnitt wird dann vorteilhaft so gross eingestellt, dass ein kontinuierliches Abziehen der zu fördernden Gegenstände durch die stromab befindliche Fördervorrichtung möglich ist. Denkbar ist auch eine Fördervorrichtung in der sich Stauabschnitte, in denen ein Durchrutschen des oder der Endlosfördermittel möglich ist, und Förderabschnitte, in denen ein Durchrutschen aufgrund der Klemmwirkung nicht möglich ist, abwechseln.

Wie gesagt, erfolgt die Förderung im Stauabschnitt aufgrund der zwischen Kragen und Endlosfördermittel bestehenden Reibkraft. Und auch das Durchrutschverhalten ist von der Reibkraft abhängig. Auch die für die Übergabe an ein stromab anschliessendes Förderorgan benötigte Übergabekraft, auch Staudruck genannt, hängt unter anderem von der Reibkraft ab. Besonders vorteilhaft ist es daher wenn die Reibkraft, abgestimmt auf die zu transportierenden Gegenstände und deren Gewicht, einstellbar ist, damit die Fördervorrichtung flexibler für unterschiedliche Gegenstände aus verschiedenen Materialien mit unterschiedlichem Gewicht eingesetzt werden kann.

Das wenigstens eine Endlosfördermittel, das zugehörige Antriebsorgan oder auch beides ist bzw. sind daher mit Vorteil als auswechselbare Elemente gestaltet. Auch der Steigungswinkel der Förderstrecke ist mit Vorteil variabel einstellbar, da sich auch der Steigungswinkel auf den Reibungskoeffizient auswirkt.

Ist die Geschwindigkeit des oder der Endlosfördermittel regelbar, so lässt sich die Differenzgeschwindigkeit regeln und so die Länge der Staustrecke regeln. Auch der Staudruck ist hierüber regelbar.

Besonders vorteilhaft sind für die Regelung der Geschwindigkeit ein oder mehrere Sensoren, insbesondere für die Geschwindigkeit der Endlosfördermittel und/oder die Abzugsgeschwindigkeit, mit der die zu transportierenden Gegenstände weggefördert werden, und/oder die Länge der Staustrecke sowie ein entsprechender Regelkreis in der Fördervorrichtung vorgesehen.

Die Umlaufebene des oder der Endlosfördermittel und eine durch die Transportstrecke beschriebene Transportbahn können einen Winkel im Bereich zwischen etwa 0° und 90° einschliessen. Dieser Winkel ist mit Vorteil so einstellbar, dass er auf die zu transportierenden Gegenstände angepasst werden kann. Flaschen mit ihrem, im Verhältnis zum Kragen, dicken Körper lassen sich beispielsweise besser mit Endlosfördermitteln transportieren die eine Neigung von etwa 0° bis 60° in Bezug auf die Transportbahn haben. Die Transportbahn ist dabei vorzugsweise etwa horizontal ausgerichtet. Preforms dagegen können sehr gut mit einem Neigungswinkel der Umlaufebene zur Transportbahn von 90° transportiert werden.

Das wenigstens eine Förderband ist vorzugsweise durch Abstützrollen und/oder Abstützschienen abgestützt, damit es nicht unter der Traglast nachgibt. Es können für Richtungsänderungen auch Umlenkrollen vorgesehen sein, welche in der Regel natürlich ebenfalls als Stützen dienen.

Die durch das Endlosfördermittel beschriebene Förderstrecke mündet stromab in einem Übergabebereich, in welchem die zu transportierenden Gegenstände an ein sich stromab anschliessendes Förderorgan oder eine weitere Fördervorrichtung übergeben werden. In einer besonders bevorzugten Ausführungsform sind als Bestandteil der erfindungsgemässen Fördervorrichtung in dem Übergabebereich Mittel vorgesehen, mit deren Hilfe die zu transportierenden Gegenstände während der Übergabe mit Druckluft stabilisierbar sind. Vorzugsweise sind diese Mittel in Form von mit einer Druckluftquelle verbundenen Druckluftdüsen ausgebildet. Die Beaufschlagung mit Druckluft in einem geeigneten Winkel verhindert, dass die Gegenstände ins Schwingen geraten und ihre Kragen von den sie stützenden Elementen der beteiligten Fördervorrichtungen abgehoben werden.

Seitlich wie auch oben und unterhalb der zu transportierenden Gegenstände, können, im Bereich der durch das wenigstens eine Endlosfördermittel beschriebenen Förderstrecke und vor allem auch im Bereich des Stauabschnittes, Leitschienen oder mitlaufende Leitbänder vorgesehen sein, um ein Schwanken und unkontrolliertes Schwingen der zu transportierenden Gegenstände weitgehend zu verhindern. Für eine Anpassung an die zu transportierenden Gegenstände sind die Leitschienen oder Leitbänder in ihrer Position zueinander variabel.

Als Endlosfördermittel kann ein Rundriemen oder ein Flachriemen oder ein Riemen mit einem mehr oder weniger beliebigen Querschnitt vorgesehen sein. Auch eine Gliederkette kann, wie oben beschrieben, als Endlosfördermittel vorgesehen sein.

Die erfindungsgemässe Fördervorrichtung ist sowohl mit als auch ohne Sternrad geeignet, um bestehende Förderanlagen damit nachzurüsten. Auch das Nachrüsten von bestehenden Anlagen allein mit dem beschriebenen Sternrad erlaubt bereits eine verbesserte Vereinzelung der zu transportierenden Gegenstände. Ausserdem können Sternrad und Fördervorrichtung ohne Sternrad auch einzeln als Ersatzteile vertrieben werden.

Weitere vorteilhafte Ausgestaltungen sind in weiteren abhängigen Ansprüchen beschrieben.

Im Folgenden wird der Erfindungsgegenstand anhand von bevorzugten Ausführungsbeispielen, welche in den beiliegenden Zeichnungen dargestellt sind, näher erläutert. Es zeigen rein schematisch:
- Fig. 1: in Seitenansicht einen Teil einer Förderanlage mit einer erfindungsgemässen Fördervorrichtung;
- Fig. 2: den Teil der Förderanlage aus Fig. 1 in Draufsicht;
- Fig. 3: vergrössert das in Fig. 1 dargestellte Umlaufförderorgan der erfindungsgemässen Fördervorrichtung mit einem zu transportierenden Gegenstand in Transportrichtung gesehen;
- Fig. 4 bis Fig. 8: weitere Ausführungsformen der erfindungsgemässen Fördervorrichtung in analoger Darstellung zu Fig. 3;
- Fig. 9 bis Fig. 11: die Auflagesituation der zu fördernden Gegenstände in Abhängigkeit von der Steigung der Förderstrecken
- Fig. 12: in Seitenansicht analog zu Fig. 1 einen Teil einer Förderanlage mit einer weiteren Ausführungsform der erfindungsgemässen Fördervorrichtung;
- Fig. 13 bis Fig. 16: jeweils in Draufsicht die Situation bei der Übergabe der zu transportierenden Gegenstände an ein erfindungsgemässes Sternrad der Fördervorrichtung.

Grundsätzlich sind in den Figuren gleiche Teile mit gleichen Bezugszeichen versehen. Die beschriebenen Ausführungsformen stehen beispielhaft für den Erfindungsgegenstand und haben keine beschränkende Wirkung.

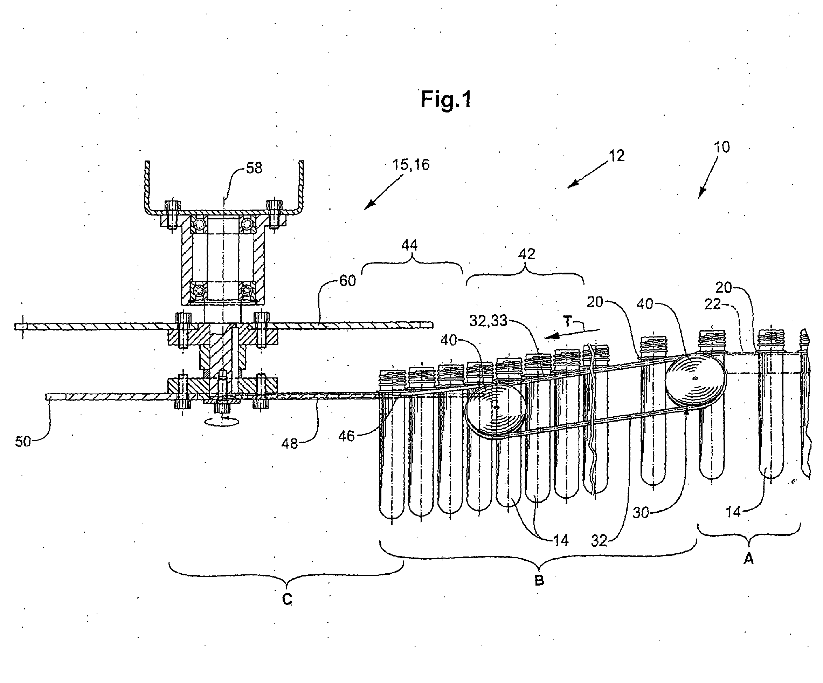

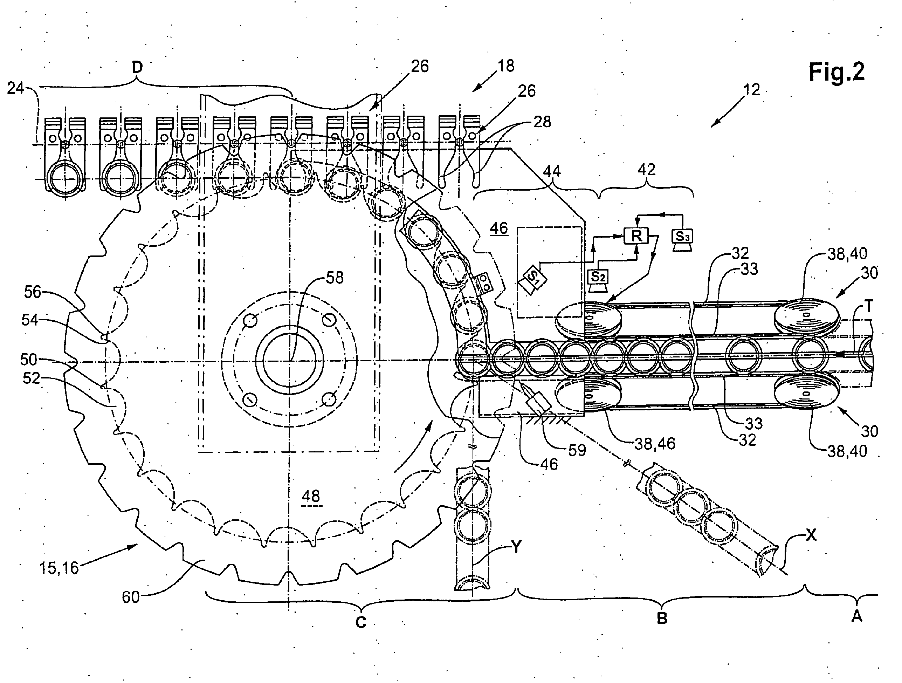

In den Fig. 1 und 2 ist ein Teil einer Förderanlage 10 mit einer erfindungsgemässen Fördervorrichtung 12 gezeigt. Wie zu erkennen ist, befördert die Förderanlage 10 in diesem Beispiel Preforms 14 von PET-Flaschen. Der gezeigte Ausschnitt der Förderanlage 10 umfasst eine erste Förderstrecke A, in der die Preforms 14 z.B. zwischen zwei Schienen 22 hängend transportiert werden. Der Transport kann auf den durch gestrichelte Linien angedeuteten Schienen 22 über eine geneigte Strecke unter dem Einfluss der Schwerkraft oder mit Hilfe eines Luftströmungskanals erfolgen (beides nicht explizit dargestellt). Die Preforms 14 werden in der Förderstrecke A in einem losen, ungeordneten Strom gefördert. Stromab der Förderstrecke A schliesst eine zweite Förderstrecke B mit einem erfindungsgemässen Umlaufförderorgan 30 der erfindungsgemässen Fördervorrichtung 12 an. Aus Platzgründen ist hier nicht die gesamte durch ein Endlosfördermittel 32 des Umlaufförderorgans 30 beschriebenen Förderstrecke dargestellt. Stromab der Förderstrecke B ist eine weitere Förderstrecke C vorgesehen, die in diesem Beispiel mit einem weiteren Förderorgan 15 der erfindungsgemässen Fördervorrichtung 12 ausgerüstet ist. Als weiteres Förderorgan 15 ist für die Vereinzelung der Preforms 14 ein erfindungsgemässes Sternrad 16 vorgesehen. In den Förderstrecken A, B, C der Förderanlage 10 werden die Preforms 14 hängend an ihren ringförmigen Kragen 20 transportiert. In Fig. 2 ist weiter eine Förderstrecke D zu erkennen, an welche die Preforms14 nach ihrer Vereinzelung durch das Sternrad 16 abgegeben werden. Die Förderstrecke D ist mit einer weiteren Fördervorrichtung ausgerüstet, die ein Fördermittel 24 aufweist. Die weitere Fördervorrichtung ist ein Kettenförderer 18, mit einem Fördermittel 24, das in der Figur 2 angedeutet durch eine strichpunktierte Linie dargestellt ist. Am Fördermittel 24 sind Klemmen 26 mit Klemmbacken 28 in definiertem Abstand zueinander angeordnet. Die Preforms 14 werden durch das Sternrad 16 in die Klemmen 26 des Kettenförderers 18 eintaktet und im Bereich der Förderstrecke D zwischen den Klemmbacken 28 der Klemmen 26 eingeklemmt und transportiert. Ein Untergreifen des Kragens 20 der Preforms 14 durch die Klemmen 26 kann für einen stabileren Transport im Beriech der Förderstrecke D nützlich sein, ist aber nicht zwingend.

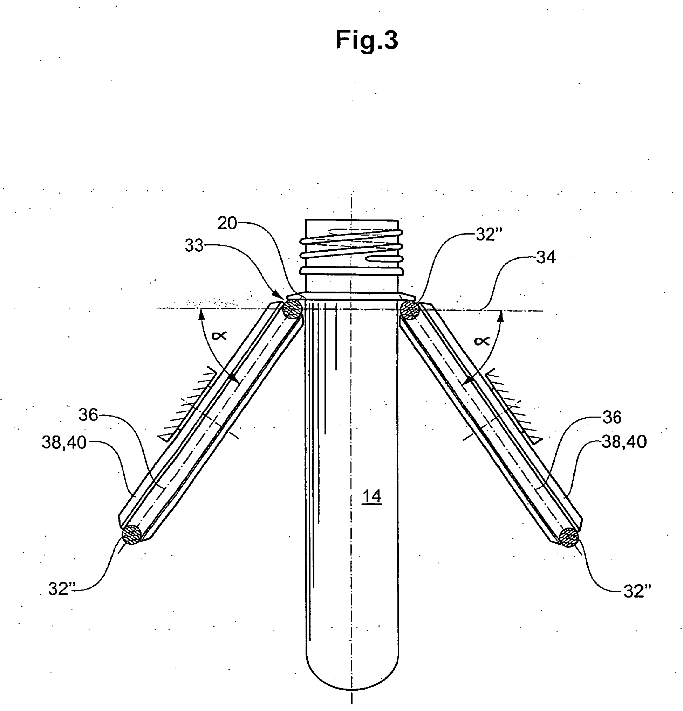

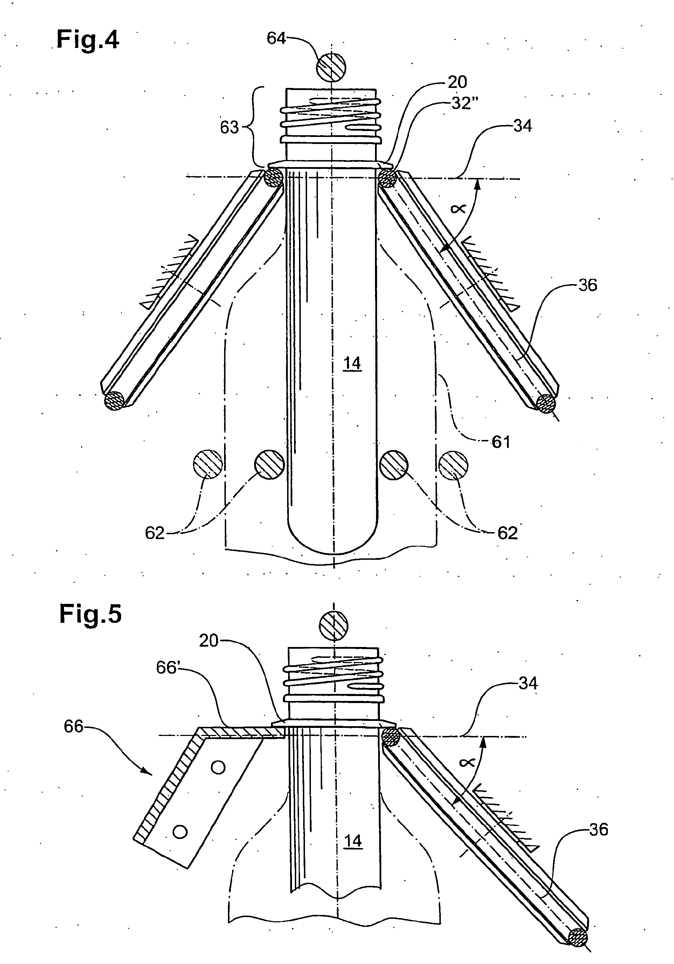

Um nun die in einem losen, ungeordneten Strom aus der Förderstrecke A ankommenden Preforms 14 in den Kettenförderer 18 der Förderstrecke D eintakten zu können, müssen die Preforms 14 vor dem Sternrad 16 gestaut und mit einem entsprechenden Staudruck in das Sternrad 16 gedrängt werden. Hierfür sind zwischen der Förderstrecke A und dem Sternrad 16 zwei erfindungsgemässe Umlaufförderorgane 30 der erfindungsgemässen Fördervorrichtung 12 in der Förderstrecke B vorgesehen. Die zwei Umlaufförderorgane 30 sind je mit einem umlaufenden Endlosfördermittel 32 versehen, wobei ihre oberen Trums 33 parallel zueinander angeordnet sind und im Wesentlichen die Förderstrecke mit ihrer Transportbahn 34 beschreiben. Für den hängenden Transport der Preforms 14 ist es sinnvoll die Transportbahn 34 quer zur Transportrichtung, Pfeil T, möglichst horizontal auszurichten während, in Transportrichtung gesehen, durch Umlenkrollen (nicht gezeigt) auch mässige Steigungen mit unterschiedlichen Steigungsgrad und unterschiedlichen Vorzeichen innerhalb einer Förderstrecke verwirklicht werden können. Die Umlaufförderorgane 30 sind in dem hier gezeigten Beispiel geneigt zur Transportbahn 34 angeordnet, wie dies besser aus der vergrösserten, schematischen Darstellung der Fig. 3 ersichtlich ist. Die prinzipiellen Umlaufebenen 36 der Umlaufförderorgane 30 schliessen in dem hier gezeigten Beispiel einen Winkel α von etwa 50° ein. Wie dies aber aus den Fig. 4 bis 8 hervorgeht, kann abhängig davon, was für ein Gegenstand transportiert werden soll und welche Art Endlosfördermittel 32 gewählt wird, ein Winkel α im Bereich von 0° (parallel) bis 90° (senkrecht) zwischen prinzipieller Umlaufebene 36 und Transportbahn 34 vorgesehen sein. Es versteht sich, dass durch Einbringen von Umlenkrollen (nicht dargestellt) statt einer Umlaufebene eine geschwungene, virtuelle Fläche vom Endlosfördermittel 32 eines Umlaufförderorgans 30 umlaufen wird. In einem solchen Fall soll mit prinzipieller Umlaufebene 36 eine durch Mittelung im betrachteten Förderabschnitt sich ergebene Ebene bezeichnet sein.

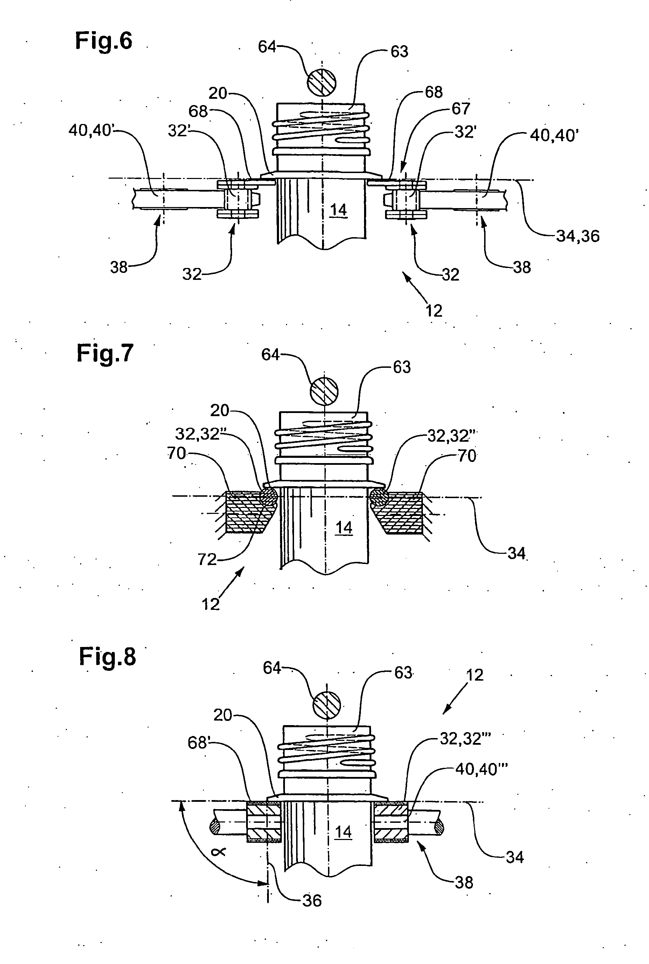

Die Endlosfördermittel 32 der Umlaufförderorgane 30 sind jeweils mittels eines Antriebsorgans 38 angetrieben, das in dem hier gezeigten Beispiel jeweils zwei Antriebsrollen 40 umfasst. Die Antriebsrollen 40 sind jeweils am Ende des Umlaufs angeordnet und dienen gleichzeitig als Umlenkrollen. Bei kurzen Förderstrecken kann auch nur eine Antriebsrolle 40, bei sehr langen Strecken können auch mehr als zwei Antriebsrollen 40 vorgesehen sein. Die Antriebsrollen 40 werden in üblicher Weise synchron betrieben, wobei für die beiden Umlaufförderorgane die gleiche Antriebsquelle (Motor) oder zwei separate Antriebsquellen vorgesehen sein können. Die Antriebsrollen 40 und Endlosfördermittel 32 sind so aufeinander abgestimmt, dass die Endlosfördermittel 32 auch unter Last nicht auf den Antriebsrollen 40 durchrutschen. Dies kann durch eine entsprechende Materialwahl für Antriebsrollen 40 und Endlosfördermittel 32 sowie eine geschickte Ausgestaltung derselben erreicht werden. Auch Beschichtungen können hier helfen. Beispiele für eine entsprechende Materialwahl sind Antriebsrollen 40 aus Metall mit einem Endlosfördermittel 32 aus einem auf das Metall abgestimmten Gummi oder einer Gummimischung. Wobei abhängig vom Metall sowohl Naturkautschuk als auch industriell hergestellter Gummi zum Einsatz kommen können. Als Metalle können auf Aluminium basierende Legierungen, Stahl und die anderen bekanntermassen für solche Zwecke eingesetzten Legierungen verwendet werden. Auch Kunststoffrollen in Kombination mit Nylonbändern sind denkbar. Wichtig ist dass ein möglichst hoher Reibungskoeffizient zwischen Antriebsorgan 38 und Endlosfördermittel 32 erreicht wird. Die Endlosfördermittel 32 können für einen besseren Halt auf den Rollen auf ihrer den Rollen zugewandten Seite auch aufgeraut oder gezahnt sein. Analoge Massnahmen können auch für die Laufflächen der Antriebsrollen vorgesehen sein. Eine andere Möglichkeit ein Durchrutschen des Endlosfördermittels 32 zu verhindern, besteht darin, das Endlosfördermittel 32 als Gliederkette 32' (vgl. Fig. 6) und das Antriebsorgan 38 als ein mit der Gliederkette 32' kämmendes Förderrad 40' auszugestalten.

In Bezug auf den Kragen 20 des zu transportierenden Gegenstandes, hier also in Bezug auf die Preforms 14 von PET-Flaschen, muss das Endlosfördermittel 32 so gewählt sein, dass ein an die Erfordernisse der aktuellen Situation angepasster Reibungskoeffizient zwischen Kragen 20 und Endlosfördermittel 32 resultiert. Der passende Reibungskoeffizient ergibt sich dabei primär aus dem Profil der Förderstrecke und aus dem benötigten Staudruck. Das ist die Kraft, mit welcher die Preforms 14 in dem hier gezeigten Beispiel an das Sternrad 16 übergeben werden. Der Reibungskoeffizient zwischen Kragen 20 und Endlosfördermittel 32 lässt sich wiederum durch Material, Beschichtung und Oberflächenstruktur des Endlosfördermittels 32 auf seiner dem Kragen 20 zugewandten Seite beeinflussen. Denkbar ist es auch die Kragen 20 zumindest auf ihrer Unterseite zu Beschichten, wobei eine solche Beschichtung auch als temporäre Beschichtung ausgeführt werden kann. Der Reibungskoeffizient wird dabei so bemessen, dass zu transportierenden Gegenstände, also in dem hier gezeigten Beispiel die Preforms 14, allein aufgrund der zwischen Endlosfördermitteln 32 und Kragen 20 bestehenden Reibkraft von dem Endlosfördermitteln 32 fortbewegt werden und zumindest in einem Stauabschnitt 42 der durch die Endlosfördermittel 32 beschriebenen Förderstrecke, bei einem entsprechenden, gegen die Transportrichtung auf die Preforms 14 einwirkenden Widerstand die Endlosfördermittel 32 unter den Kragen 20 der Preforms 20 hindurchrutschen. An den Stauabschnitt 42 schliesst sich in dem hier gezeigten Beispiel ein Übergabebereich 44 mit Stützkulissen 46 an, auf welchen die Preforms 14 aufgrund des Staudrucks aufgeschoben werden. Von diesem Übergabebereich 44 werden die Preforms 14 durch das Sternrad 16 abgezogen. Die Stützkulisse 46 bildet im Übergabebereich eine Art Schienenpaar auf welches die Preforms 14 vor dem Sternrad16 aufgeschoben werden. Hierdurch ist eine gute Führung der Preforms im Übergabebereich gewährleistet. Wie in Fig. 2 gezeigt, erstreckt sich die Stützkulisse 46 mit ihrem einen Rand entlang des Transportweges, den die Preforms 14 im Sternrad 16 zurücklegen, so dass die Preforms 14 auch auf diesem Abschnitt der Förderstrecke gut geführt sind.

Zum Abziehen der Preforms 14 weist das Sternrad 16 eine Sternplatte 48 mit gleichmässig über den Umfang verteilten, nach aussen abstehenden Fingern 50 auf, die durch bogenförmige Aussparungen 52 miteinander verbunden sind. Die vorlaufende, d.h. die in Transportrichtung zeigende, bogenförmige Kante 54 jedes Fingers 50 weist dabei einen engeren Radius auf als die nachlaufende Kante 56, wobei die Radien fliessend ineinander übergehen. Die Radien sind auf den Durchmesser der Preforms 14 im Bereich ihres Kragens 20 abgestimmt. Diese spezielle Ausgestaltung der Sternplatte 48 ermöglicht es, die Preforms 14 nicht nur in einem rechten Winkel auf das Sternrad zu fördern, sondern wie dies durch mit gestrichelten Linien angedeuteten Förderachsen X und Y angedeutet ist, in variablen Winkeln bis hin zu einer tangentialen Zuführung. Um ein Herausfallen der Preforms 14 aus dem Sternrad zu verhindern, ist ein Teil der Stützkulisse 46, wie oben bereits erwähnt, so ausgebildet, dass sie im Förderbereich mit ihrer stützenden Seite den Umfang der Sternplatte 48 in passendem Abstand nachzeichnet.

In dem hier gezeigten Beispiel ist das Sternrad 16 ausserdem für einen synchronisierten Antrieb mit dem Fördermittel 24 des Kettenförderers 18 verbunden, wodurch das Eintakten der Preforms 14 in den Kettenförderer 18 vereinfacht wird. Die Wirkverbindung wird hier durch ein oberhalb der Sternplatte 48 und in Distanz zu dieser auf einer gemeinsamen Drehachse 58 angeordneten Getrieberad 60 hergestellt, das mit dem Fördermittel 24 des Kettenförderers 18 kämmt.

Eine Grundform des erfindungsgemässen Verfahrens lässt sich nun anhand der Figuren 1 und 2 wie folgt beschreiben: Ziel ist eine problemlose Übergabe der zu transportierenden Gegenstände von einem Förderstrecke A mit weniger gut definiertem und evtl. kleinerem Abstand zwischen den zu transportierenden Gegenständen stromauf der erfindungsgemässen Fördervorrichtung 12 auf eine Förderstrecke D mit wohl definiertem grösserem Abstand stromab der Fördervorrichtung12, in dem hier gezeigten Beispiel realisiert durch den Kettenförderer 18. Hierfür ist es nötig, die in loser Folge ankommenden Gegenstände vor ihrer Vereinzelung durch das Sternrad 16 zu stauen. Die von den Endlosfördermitteln 32 beschriebene Förderstrecke übernimmt in ihrem stromaufwärts liegenden Bereich die in losem Strom ankommenden Preforms 14, wobei diese an ihren Kragen 20 auf die Endlosfördermittel 32 der Fördervorrichtung 12 gehängt werden. Die Preforms 14 werden aufgrund der zwischen Endlosfördermitteln 32 und Kragen 20 bestehenden Reibkraft von den Endlosfördermitteln 32 fortbewegt. Im Übergabebereich 44 wirkt auf die Preforms 14 entgegen ihrer Transportrichtung T ein Widerstand ausgehend von dem Sternrad 16 ein. Dieser Widerstand ist so gross, dass die Reibkraft zwischen Endlosfördermitteln 32 und Kragen 20 überwunden wird und die Endlosfördermittel 32 unter den Kragen 20 hindurchrutschen. Die Preforms 14 werden vor dem Sternrad 16 gestaut und mit einem genügend hohen Staudruck gegen das Sternrad 16 gedrängt, so dass die Übergabe in das Sternrad 16 problemlos erfolgt. Der genügend hohe Staudruck wird durch eine entsprechend Hohe Geschwindigkeit der Endlosfördermittel 32 gewährleistet.

Bei zu geringem Staudruck werden die Preforms 14 nicht oder nicht schnell genug in das Sternrad gedrängt und es entstehen Probleme beim Abziehen der Preforms14 aus dem Übergabebereich 44 der Förderstrecke B in die Förderstrecke C des Sternrades 16. Um dies zu verhindern, ist in dem in den Fig. 1 und 2 dargestellten Beispiel die Fördervorrichtung 12 so ausgestaltet, dass der Staudruck regelbar ist. Hierfür ist die Fördervorrichtung 12 mit einem entsprechenden Regelkreis R ausgestattet. Geregelt wird primär die Geschwindigkeit der Endlosfördermittel. Dies hat aber auch Einfluss auf die Differenzgeschwindigkeit zwischen Abzugsgeschwindigkeit des Sternrades 16 und Geschwindigkeit der Endlosfördermittel 32, und allenfalls auf die Länge der Staustrecke. Als Staustrecke wird hier der Bereich des Übergabebereichs 44 und des Stauabschnittes 42 verstanden, in dem sich gestaute, d.h. in engem Kontakt hintereinander befindliche Preforms 14 befinden. Um die Geschwindigkeit der Endlosfördermittel 32 regeln zu können, sind in dem hier gezeigten Beispiel Sensoren S1, S2, S3 für die Erfassung der Abzugsgeschwindigkeit, der Geschwindigkeit der Endlosfördermittel 32 und der Länge der Staustrecke vorgesehen. Primär wird über den Regelkreis auf die Geschwindigkeit der Endlosfördermittel Einfluss genommen. In speziellen Ausführungsformen kann aber auch auf die Umdrehungsgeschwindigkeit des Sternrades 16 und somit auf die Abzugsgeschwindigkeit Einfluss genommen werden. Ist, so wie hier gezeigt, das Sternrad 16 bezüglich des Antriebes mit der sich stromab anschliessenden Fördervorrichtung 18 wirkverbunden, so wird automatisch auch deren Fördergeschwindigkeit beeinflusst. Auf diese Weise lässt sich der Staudruck regeln, so dass die Preforms mit einem definierten Staudruck an das Sternrad 16 übergeben werden können. Wie gezeigt werden konnte, kann mit dem erfindungsgemässen Verfahren und einer erfindungsgemässen Fördervorrichtung 12 das Aufstauen, die Übergabe und das Eintakten von zu transportierenden Gegenständen verbessert werden. Dies insbesondere auch dann, wenn die Übergabe zwischen unterschiedlich getakteten Förderstrecken erfolgt, bzw. von einem Transportabschnitt mit ungeordnetem, losen Strom auf einen Transportabschnitt mit einer vorbestimmten Teilung bzw. einem vorbestimmten Takt.

Ein Schwachpunkt beim hängenden Transport von Preforms 14 oder anderen Gegenständen stellen Wechsel in der Transportrichtung dar, da die Gegenstände dabei leicht anfangen unkontrolliert zu schwingen. In dem hier gezeigten Beispiel fällt ein solcher Richtungswechsel mit der Übergabe von der erfindungsgemässen Fördervorrichtung 12 auf das Sternrad 16 und mit einer Beschleunigung aus einer Stauposition zusammen. Zur Stabilisierung der Preforms 14 in ihrer Position im Übergabebereich 44 ist hier eine Druckluftdüse 58 als Mittel zum Beaufschlagen der Preforms 14 mit Druckluft vorgesehen.

Die in Fig. 4 dargestellte Ausführungsform der erfindungsgemässen Fördervorrichtung 12 weist seitlich im unteren Drittel der Preforms 14 angreifende, Leitschienen 62 auf, die ein seitliches Schwingen der Preforms 14 verhindern. Wie durch gestrichelte Linien angedeutet, kann die Distanz zwischen den Leitschienen variabel eingestellt und so auf die zu transportierenden Gegenstände z.B. auch auf Flaschen 61, eingestellt werden. Statt der Leitschienen 62 können auch mitlaufende Leitbänder (nicht dargestellt) vorgesehen sein, deren Distanz zueinander vorzugsweise ebenfalls einstellbar ist. Auch die Position in Bezug auf die Transportbahn 34 ist vorzugsweise einstellbar, so dass unabhängig von den zu transportierenden Gegenständen die Leitbänder oder Leitschienen 62 etwa im unteren Drittel der zu transportierenden Gegenstände auf diese einwirken. Das Schwingen in Transportrichtung und vor allem auch ein Abheben des Kragens 20 vom Endlosfördermittel 32 wird durch eine oberhalb des Kopfes 63 angeordnete Schiene 64 weitgehend verhindert. Auch die Schiene 64 ist in ihrer Position zur Transportbahn 34 einstellbar und somit an unterschiedliche Kopfhöhen anzupassen.

Zu beachten ist, dass sich Preforms 14 und z.B. Flaschen während des Transportes aufgrund ihrer Geometrie zum Teil anders verhalten. Der Durchmesser des Flaschenhalses mit dem Kragen ist relativ klein im Verhältnis zum Durchmesser des Körpers, vergleiche die in Fig. 4 mit gestrichelten Linien angedeutete Kontur 61. Laufen Flaschen 61 aufeinander auf, kann dies zu grösseren Auslenkungen im Bereich des Kragens 20 und des oberhalb des Kragens 20 angeordneten Kopfes 63 führen. Im schlimmsten Fall verkanten die Flaschen im Bereich des Halses/Kragens 20 und ein manueller Eingriff wird notwendig. Bei Preforms 14 deren Körperdurchmesser etwa dem des Halses mit dem Kragen 20 und dem Kopf 63 entspricht, ist diese Gefahr geringer.

Wie in Fig. 5 gezeigt, kann die Fördervorrichtung 12 statt mit zwei Endlosfördermitteln 32 auch nur auf einer Seite der Förderstrecke mit einem Endlosfördermittel 32 ausgestattet sein. Auf der dem Endlosfördermittel 32 gegenüberliegenden Seite ist dann eine Stützeinrichtung 66 vorgesehen, die, wie in dem hier gezeigten Beispiel, als eine den Kragen 20 der zu transportierenden Preforms 14 untergreifende Schiene 66' ausgebildet ist. Statt einer Schiene können auch mehrere Schienen 66' hintereinander vorgesehen sein oder es können auch Schienen 66' und Endlosfördermittel 32 gemischt hintereinander als Stützeinrichtung 66 vorgesehen sein. Eine aus mehreren Elementen 66', 32 zusammengesetzte Stützeinrichtung 66 kann beispielsweise sinnvoll sein, wenn die Transportbahn 34 unterschiedliche Steigungen und/oder Biegungen aufweist.

Fig. 6 zeigt eine weitere Ausführungsform der erfindungsgemässen Fördervorrichtung 12, bei der, wie weiter oben bereits beschrieben, die Endlosfördermittel 32 durch Gliederketten 32' gebildet und die Antriebsorgane 38 als mit der Gliederkette 32' kämmende Förderräder 40' ausgestaltet sind. Eine solche Ausgestaltung verhindert zuverlässig ein Durchrutschen des Endlosfördermittels 32. Für einen störungsfreien Transport sind an den Gliederketten 32' seitlich in Richtung der Kragen 20 hervorstehende Tragelemente 67 angebracht, die in dem hier gezeigten Beispiel mit einer Beschichtung 68 versehen sind, welche zur Erzielung des gewünschten Reibungskoeffizienten zwischen Kragen 20 und Endlosfördermittel 32 abgestimmt ist. Die Umlaufebene 36 liegt in diesem Beispiel parallel zur Transportbahn 34, der von beiden eingeschlossene Winkel α ist also 0°.

Bei der in Fig. 7 gezeigten Ausführungsform der erfindungsgemässen Fördervorrichtung 12 sind wie in den Fig. 3 bis 5 als Endlosfördermittel 32 Rundriemen 32" vorgesehen. Die Rundriemen 32" sind in Abstützschienen 70 aus Kunststoff abgestützt, wofür die Abstützschienen 70 eine gegengleich zu den Rundriemen ausgebildete Nut 72 aufweisen. Statt Abstützschienen 70 aus Kunststoff sind auch Abstützschienen 70 aus Metall denkbar, deren Nuten 72 dann z.B. mit Polytetrafluorethylen (Teflon®) beschichtet sind, um den Abrieb sowohl für die Riemen 32" als auch für die Abstützschienen 70 möglichst gering zu halten. Auch Abstützrollen, nicht dargestellt, können statt oder zusätzlich zu den Abstützschienen 70 vorgesehen sein.

In einer weiteren, in Fig. 8 dargestellten Ausführungsform der erfindungsgemässen Fördervorrichtung 12 sind die Endlosfördermittel 32 als Flachriemen 32''' ausgebildet. Die Flachriemen 32''' werden über Stummelwalzen 40''' angetrieben und sind in diesem Beispiel auf ihrer den Kragen 20 zugewandten Seite mit einer Beschichtung 68' versehen, die den gewünschten Reibungskoeffizient zwischen Kragen 20 und Endlosfördermitteln 32 gewährleistet. Die hier realisierte Umlaufebene 36 steht etwa senkrecht auf der Transportbahn 34 und schliesst also mit dieser einen Winkel α von etwa 90° ein.

Die hier beschriebene Vielfalt bezüglich Endlosfördermitteln 32, 32', 32", 32"', Stützeinrichtung 66, 66' und Antriebsorganen 38, 40, 40', 40''' zeigt, wie verschieden die Möglichkeiten zur Detailausgestaltung sind. Eine Aufzählung aller denkbaren Varianten würde daher den Rahmen der Anmeldung sprengen, dies bedeutet jedoch nicht, dass die nicht unter die erfinderische Idee dieser Anmeldung fallen.

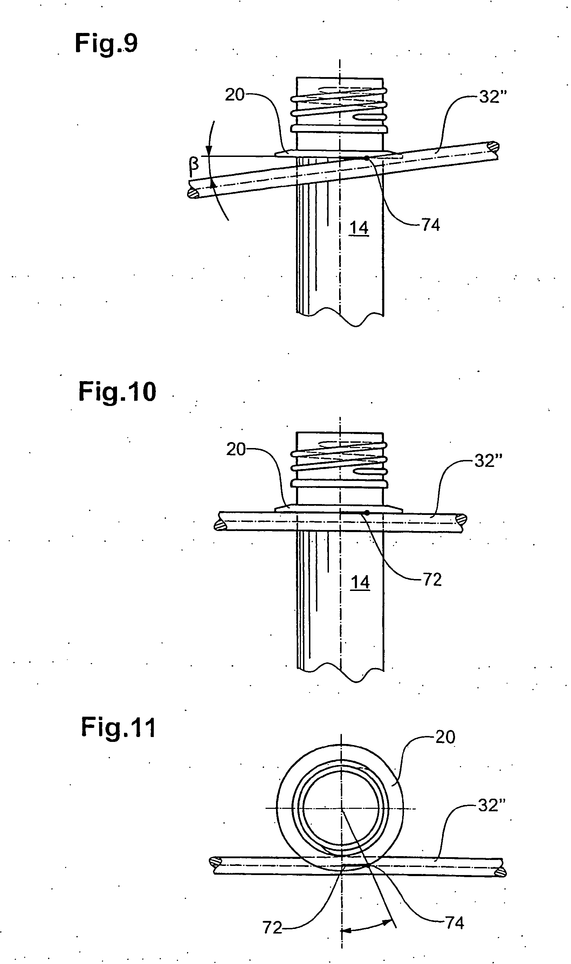

Wie oben bereits beschrieben ist es möglich, durch die Wahl der Materialien, Beschichtungen 68, 68' durch die Ausgestaltung mit einem Endlosfördermittel 32 und Stützeinrichtung 66 oder zwei Endlosfördermitteln 32 etc. Einfluss zu nehmen auf die Reibungskoeffizienten zwischen Endlosfördermittel 32 und Antriebsorgan 38, 40,40', 40''' einerseits und Endlosfördermittel 32 und Kragen 20 andererseits. Ein weiterer Faktor der den Reibungskoeffizienten beeinflusst, ist die Steigung der Förderstrecke in Transportrichtung. Dies muss bei der Gestaltung der Förderstrecke berücksichtigt werden, kann aber auch gezielt eingesetzt werden um bestimmte Effekte zu erzielen, wie in den Fig. 9 bis 11 am Beispiel eines Rundriemens 32" dargestellt. Bei horizontaler Förderung (Fig. 10 und 11) liegt der Kragen 20 eines zu transportierenden Preforms 14 entlang einer Auflagelinie 72 auf, die wirkende Reibungskraft ist relativ gross. Bereits bei einer mässigen Steigung um den Winkel β (Fig. 9 und 11) liegt der Kragen 20 des Preforms 14 nur noch auf einem Auflagepunkt 74 auf. Die wirkende Reibungskraft ist entsprechend kleiner.

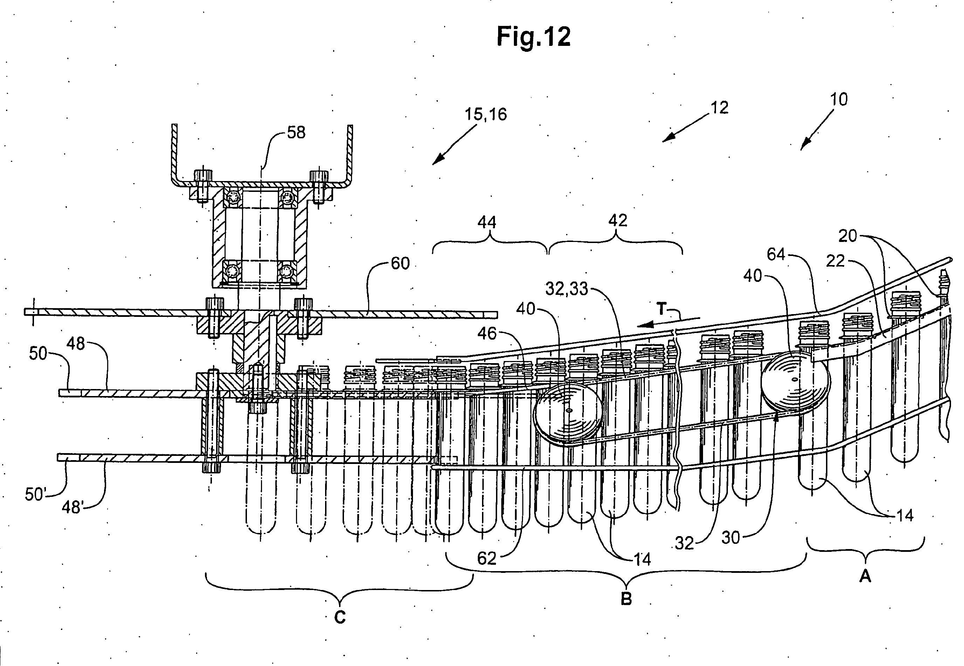

In Fig. 12 ist eine weitere Ausführungsform der erfindungsgemässen Fördervorrichtung 12 dargestellt. Prinzipiell ist die Fördervorrichtung 12 gleich aufgebaut wie die in den Figuren 1 bis 3 dargestellte Fördervorrichtung. Aber in dem hier gezeigten Beispiel sind entlang der Förderstrecken A und B seitliche Leitbänder 62 und auch eine obere Leitschiene 64 vorgesehen, wie sie im Schnitt auch in Fig. 4 gezeigt wurden. Ausserdem ist in Fig. 12 auch eine weitere Ausführungsform des erfindungsgemässen Sternrades 16 dargestellt. Prinzipiell ist das Sternrad 16 in diesem Beispiel gleich aufgebaut wie das in den Figuren 1 und 2 dargestellte Sternrad. Das Sternrad 16 weist aber in dem hier gezeigten Beispiel zwei auf einer gemeinsamen Drehachse 58 in Distanz zueinander angeordnete und parallel auf die zu transportierenden Preforms 14 einwirkende Sternplatten 48, 48' auf. Die obere, tragende Sternplatten 48 untergreift mit ihren Fingern 50 die Kragen 20 der Preforms 14 und sorgt für einen an den Kragen 20 hängenden Transport derselben. Die zweite oder untere, Sternplatte, ist die stützende Sternplatte 48'. Sie greift gleichzeitig mit der tragenden Sternpatte 48 seitlich im unteren Drittel der Preforms 14 an diesen an und stützt sie seitlich ab, so dass ein unkontrolliertes Schwingen der Preforms 14 bei der Übergabe verhindert wird.

Die Distanz zwischen den Sternplatten 48, 48' ist einstellbar, so dass sie auf unterschiedliche zu transportierende Gegenstände angepasst werden kann. Ausserdem sind die Sternplatten 48, 48' auswechselbar. Auf diese Weise können in Abstimmung mit den zu transportierenden Gegenständen die Sternplatten 48, 48' mit den passenden Konturen eingesetzt werden. Für Flaschen beispielsweise muss die stützende Sternplatte 48' eine von der tragenden Sternplatte 48 abweichende Kontur aufweisen, damit die Finger 50' der unteren, stützenden Sternplatte 48' zeitgleich mit den Fingern 50 der oberen, tragenden Sternplatte 48 auf die aus dem Übergabebereich 44 abzuziehenden Flaschen eingreifen zu können.

Es ist für den Fachmann klar, dass obgleich hier von Sternplatten 48, 48' die Rede ist, die Sternplatten 48, 48' nicht als massive Platten sondern z.B. auch in radähnlicher Form, mit Materialaussparungen zwecks Gewichtsreduktion oder in Form von Speichenrädern etc. vorliegen können.

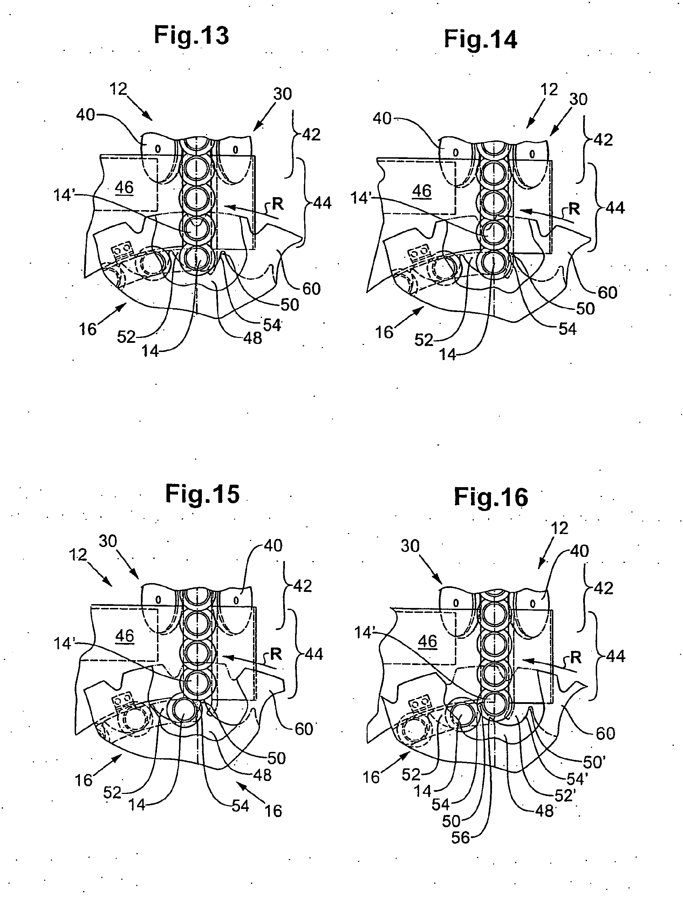

Das Abziehen der Preforms 14 aus dem Übergabebereich 44 ist in den Fig. 13 bis 16 genauer gezeigt. In Fig. 13 befindet sich eine Preform 14 etwa am tiefsten Punkt der zwischen zwei Fingern 50 vorgesehenen taschenartigen Aussparung 52. Die Preform 14 wird durch den mittels des Umlaufförderorgans 30 auf die im Übergabebereich 44 gestauten Preforms 14 ausgeübten Staudruck in die Aussparung 52 des Sternrades 16 hineingedrängt. Durch die Rotationsbewegung, Pfeil R, des Sternrades 16 wird die vorlaufende bogenförmige Kante mit dem engeren Radius in Rotationsrichtung R gegen die Preform 14 gedrückt, Fig. 14. Die Preform 14 wird von der vorlaufenden Kante 54 und dem zugehörigen Finger 50 in Rotationsrichtung R mitgenommen und von den in einer Reihe aufgestauten Preforms 14 abgezogen, Fig. 15. Der vorstehende Finger 50 des Sternplatte 48 drängt sich dabei zwischen die abgezogene Preform 14 und die durch den Staudruck nachgeschobene nächste Preform 14', Fig. 15 und 16. Die nachgeschobene Preform 14' rollt an der nachlaufenden bogenförmigen Kante 56 des Fingers 50, die einen grösseren Radius aufweist, sanft geführt gegen den tiefsten Punkt der nächsten taschenförmigen Aussparung 52', Fig. 16, und der ganze Prozess beginnt von vorn.

Der Fachmann weiss, dass und wie er die hier anhand der Figuren gezeigten einzelnen Elemente der erfindungsgemässen Fördervorrichtung 12 sinnvoll kombinieren kann. Als weitere Ausführungsform, die hier nicht dargestellt ist, ist es denkbar, dass die Distanz der oberen bzw. inneren Trums 33 der Umlaufförderorgane 30, bzw. des einen Umlaufförderorgans 30 und der Stützeinrichtung 66 über der durch das Endlosfördermittel 32 beschriebene Förderstrecke variabel einstellbar ist. Dies kann z.B. mit Hilfe von quer zur Förderstrecke bewegbaren Umlenkoder Stützrollen, oder quer zur Förderstrecke bewegbare Abstützschienen 70 oder aber durch quer zur Förderstrecke bewegbare Elemente 66', 32 einer Stützeinrichtung 66 realisiert werden. Ist die Distanz variabel auf der durch das Endlosfördermittel 32 beschriebenen Förderstrecke abschnittsweise einstellbar, so kann die Förderstrecke in Transportbereiche und Staubereiche aufgeteilt werden. In den Transportbereichen ist die Distanz etwas kleiner ist als der Durchmesser der zu transportierenden Gegenstände im Bereich ihres Kragens 20 und in den Staubereichen 42 ist sie ein weinig grösser. Im Transportbereich wird ein Durchrutschen des Endlosfördermittels 32 unter den Kragen 20 aufgrund einer seitlich aufgebrachten Klemmwirkung verhindert und die Gegenstände können nur transportiert aber nicht gestaut werden. Solche Abschnitte mit variabler Länge werden vorzugsweise stromaufwärts vorgesehen. In den vorzugsweise stromabwärts gelegenen Stauabschnitten 42 ist dagegen sowohl ein Transport als auch ein Stauen der zu transportierenden Gegenstände möglich. In den Stauabschnitten erfolgt, wie beschrieben der Transport aufgrund der Reibungskraft zwischen Endlosfördermittel 32 und Kragen 20, während bei Einwirken eines genügend grossen Widerstandes auf die Gegenstände entgegen der Transportrichtung das Endlosfördermittel 32 in diesem Bereich unter dem Kragen 20 durchrutscht und die Gegenstände gestaut werden.

Wie gezeigt werden konnte, bringt die erfindungsgemässe Fördervorrichtung viele Vorteile wenn zu transportierenden Gegenstände gestaut oder vereinzelt werden sollen. Weitere Vorteile sind z.B., dass gegenüber einer auf Schwerkraft basierenden Schienenfördervorrichtung der Staudruck auch ohne grosses Gefälle hergestellt werden kann und somit die grossen Bauhöhen wegfallen. Wartungsarbeiten müssen somit nicht in grosser Höhe ausgeführt werden. Weiter sind ohne Schwierigkeit horizontale Förderstrecken oder auch Förderstrecken mit einem leichten Anstieg problemlos gestaltbar. Im Verhältnis zu Schienenfördervorrichtungen, die mit einem Druckluftstrom betrieben werden, ist eine erfindungsgemässe Fördervorrichtung mit Endlosfördermittel in der Regel kostengünstiger. Mit Hilfe der erfindungsgemässen Fördervorrichtung sind die zu transportierenden Gegenstände im Übergabebereich gut geführt. Wird ein Sternrad als Mittel zur Vereinzelung der zu transportierenden Gegenstände eingesetzt so ist auch in diesem Bereich erfindungsgemäss für eine besonders gute Führung gesorgt. All diese Massnahmen führen zu einer höheren Betriebssicherheit, so dass weniger manuelle Eingriffe nötig sind, und sich die Stillstandszeiten minimieren. Generell kann mit der erfindungsgemässen Fördervorrichtung eine Leistungserhöhung mit höheren Durchsatzzahlen pro Stunde erreicht werden.

## Patentansprüche

1. Verfahren zum Fördern von Gegenständen, die einen Kragen oberhalb ihres Schwerpunktes aufweisen, mit Hilfe eines umlaufenden Endlosfördermittels, **dadurch gekennzeichnet, dass** die zu transportierenden Gegenstände (14) mindestens auf einem Stauabschnitt (42) einer durch das Endlosfördermittel (32, 32', 32", 32"') beschriebenen Förderstrecke mit wenigstens einer Seite ihrer Kragen (20) auf das Endlosfördermittel (32, 32', 32", 32"') gehängt und von diesem gegen die Schwerkraft abgestützt werden, wobei die Gegenstände (14) aufgrund der zwischen Endlosfördermittel (32, 32', 32", 32"') und Kragen (20) bestehenden Reibkraft vom Endlosfördermittel (32, 32', 32", 32"') fortbewegt werden, und wobei die Reibkraft derart bemessen ist, dass bei einem entsprechenden, gegen die Transportrichtung (T) auf einen zu transportierenden Gegenstand (14) einwirkenden Widerstand das Endlosfördermittel (32, 32', 32", 32"') unter dem Kragen (20) des zu transportierenden Gegenstandes (14) durchrutscht, und wobei die Reibkraft zwischen Kragen (20) und Endlosfördermittel (32, 32', 32", 32"') eingestellt wird, indem insbesondere ein passendes Material für das wenigstens eine Endlosfördermittel (32, 32', 32", 32"') im Verhältnis zum Material des Kragens (20) des zu transportierenden Gegenstandes und/oder ein entsprechender Steigungswinkel (β) der Förderstrecke und/oder eine entsprechende Beschichtung (68, 68') des wenigstens einen Endlosfördermittels (32, 32', 32", 32"') und/oder des Kragens (20) gewählt wird.

2. Verfahren nach Anspruch 1, **dadurch gekennzeichnet, dass** die zu transportierenden Gegenstände (14) an ein stromab angeordnetes Förderorgan (15, 16) oder eine weitere Fördervorrichtung (18) übergeben werden und hierfür die Förderleistung des wenigstens einen Endlosfördermittels (32, 32', 32", 32"') höher eingestellt wird als die Abzugsgeschwindigkeit, mit der die Gegenstände (14) durch das Förderorgan (15, 16) abgezogen werden, wodurch die Gegenstände (14) im Stauabschnitt (42) eine Staustrecke bildend aufgestaut und mit einem Staudruck beaufschlagt werden.

3. Verfahren nach Anspruch 2, **dadurch gekennzeichnet, dass** der Staudruck oder die Länge der Staustrecke durch einstellen der Geschwindigkeit des wenigstens einen Endlosfördermittels (32, 32', 32", 32"') eingestellt wird.

4. Verfahren nach Anspruch 3, **dadurch gekennzeichnet, dass** eine Differenzgeschwindigkeit zwischen Abzugsgeschwindigkeit und Geschwindigkeit des wenigstens einen Endlosfördermittels (32, 32', 32", 32"') und/oder die Länge der Staustrecke mit Hilfe eines Regelkreises (R) reguliert und hierfür insbesondere die Geschwindigkeit des wenigstens einen Endlosfördermittels (32, 32', 32", 32"') und/oder die Abzugsgeschwindigkeit und/oder die Länge der Staustrecke erfasst werden.

5. Verfahren nach einem der Ansprüche 2 bis 4, **dadurch gekennzeichnet, dass** bei der Übergabe der zu transportierenden Gegenstände (14) auf das stromab angeordnete Förderorgan (15, 16) oder die weitere Fördervorrichtung (18) die Gegenstände (14) mit Druckluft beaufschlagt und so in ihrer Position stabilisiert werden.

6. Fördervorrichtung zur Durchführung des Verfahrens nach Anspruch 1-5, mit einem umlaufenden, mittels Antrieborganen angetriebenen Endlosfördermittel zur Förderung von Gegenständen, welche oberhalb ihres Schwerpunktes einen Kragen aufweisen, **dadurch gekennzeichnet, dass** das Endlosfördermittel (32, 32', 32", 32"') und das Antriebsorgan (38, 40, 40', 40'") so aufeinander abgestimmt sind, dass ein Durchrutschen des Endlosfördermittels (32, 32', 32", 32"') auf dem Antriebsorgan (38, 40, 40', 40"') unter Last verhindert wird, und **dadurch** dass die zu fördernden Gegenstände (14) auf wenigstens einer Seite ihrer Kragen (20) hängend durch das Endlosfördermittel (32, 32', 32", 32"') gegen die Schwerkraft abgestützt, wenigstens in einem Stauabschnitt (42) einer durch das Endlosfördermittel (32, 32', 32", 32"') beschriebenen Förderstrecke, ohne dass klemmend auf sie eingewirkt wird, transportierbar sind, wobei die Fortbewegung der zu transportierenden Gegenstände (14) aufgrund der zwischen Kragen (20) und Endlosfördermittel (32, 32', 32", 32"') bestehenden Reibkraft erfolgt und die Reibkraft einstellbar ist, und zwar insbesondere auf eine benötigte Übergabekraft, mit der die zu transportierenden Gegenstände (14) auf ein weiter stromab angeordnetes Förderorgan (15, 16) oder eine weitere Fördervorrichtung (18) zu übergeben sind.

7. Fördervorrichtung nach Anspruch 6, **dadurch gekennzeichnet, dass** zur Vermeidung des Durchrutschens des Endlosfördermittels (32, 32', 32", 32"') auf dem Antriebesorgan (38, 40, 40', 40"'), das Endlosfördermittel (32, 32', 32", 32"') aus einem entsprechenden auf das Material des Antriebsorgans (38, 40, 40"') abgestimmten Material besteht und oder das Endlosfördermittel (32, 32', 32", 32"') und/oder das Antriebsorgan (38, 40, 40"') eine entsprechende Beschichtung aufweisen oder als Endlosfördermittel (32) eine Gliederkette (32') und als Antriebsorgan (38) ein mit der Gliederkette (32') kämmendes Förderrad (40') vorgesehen sind.

8. Fördervorrichtung nach Anspruch 6 oder 7, **dadurch gekennzeichnet, dass** auf der dem Endlosfördermittel (32, 32', 32", 32''') gegenüberliegenden Seite eine Stützeinrichtung (66) vorgesehen ist, die vorzugsweise durch eine oder mehrere hintereinander angeordneten Stützschienen (66') und/oder durch wenigstens ein weiteres Endlosfördermittel (32, 32', 32", 32"') gebildet ist, wobei das oder die Endlosfördermittel (32, 32', 32", 32''') analog zum ersten Endlosfördermittel (32, 32', 32", 32"') ausgebildet sind.

9. Fördervorrichtung nach Anspruch 8, **dadurch gekennzeichnet, dass** die Distanz zwischen dem Endlosfördermittel (32, 32', 32", 32"') und der Stützeinrichtung (66), vorzugsweise variabel über der Förderstrecke, einstellbar ist.

10. Fördervorrichtung nach Anspruch 6, **dadurch gekennzeichnet, dass** die Reibkraft zwischen Endlosfördermittel (32, 32', 32", 32"') und Kragen (20) durch eine entsprechende Materialwahl des Endlosfördermittels (32, 32', 32", 32"') und/oder durch einen entsprechenden Steigungswinkel (β) der Förderstrecke und/oder durch eine entsprechende Beschichtung (68) des Endlosfördermittels (32, 32', 32", 32"') und/oder des Kragens (20) einstellbar ist.

11. Fördervorrichtung nach einem der Ansprüche 6 bis 10, **dadurch gekennzeichnet, dass** die Geschwindigkeit des oder der Endlosfördermittel (32, 32', 32", 32"') regelbar ist.

12. Fördervorrichtung nach Anspruch 11, **dadurch gekennzeichnet, dass** für die die Regelung der Geschwindigkeit ein Regelkreis (R) und ein oder mehrere Sensoren (S1, S2, S3) vorgesehen sind für das Erfassen wenigstens eines der folgenden Parameter: der Geschwindigkeit des wenigstens einen Endlosfördermittels (32, 32', 32", 32"') und/oder die Abzugsgeschwindigkeit und/oder die Länge der Staustrecke.

13. Fördervorrichtung nach einem der Ansprüche 6 bis 12, **dadurch gekennzeichnet, dass** die Umlaufebene (36) des oder der Endlosfördermittel (32, 32', 32", 32"') und eine durch die Transportstrecke beschriebene Transportbahn (34) einen Winkel (α) im Bereich zwischen etwa 0° und 90° einschliessen.

14. Fördervorrichtung nach einem der Ansprüche 6 bis 13, **dadurch gekennzeichnet, dass** in einem Übergabebereich (44) in dem die Übergabe der zu transportierenden Gegenstände (14) an das stromab angeordnete Förderorgan (15, 16) oder eine weitere Fördervorrichtung (18) vorgesehen ist, Mittel (59) vorgesehen sind, mit deren Hilfe die zu transportierenden Gegenstände stabilisierbar sind und zwar vorzugsweise mit Druckluft.

15. Fördervorrichtung nach einem der Ansprüche 6 bis 14, **dadurch gekennzeichnet, dass** als weiteres Förderorgan (15) der Fördervorrichtung (12) für ein Eintakten in eine weiter stromab angeordnete Fördervorrichtung (18) anschliessend an den Übergabebereich (44) ein Sternrad (16) vorgesehen ist, welches für eine kontrollierte Übergabe zwei auf einer gemeinsamen Drehachse (58) in Distanz zueinander angeordnete, gleichzeitig auf die zu transportierenden Gegenstände (14) einwirkende Sternplatten (48, 48') aufweist.

16. Fördervorrichtung nach Anspruch 15, **dadurch gekennzeichnet, dass** die Sternplatten (48, 48') mit über den Umfang gleichmässig verteilten, nach aussen abstehenden Fingern (50, 50') versehen sind, die über bogenförmige, taschenartige Aussparungen (52) für die Aufnahme der zu transportierenden Gegenstände (14) miteinander verbunden sind, wobei insbesondere die in Rotationsrichtung (R) zeigende vorlaufende bogenförmige Kante (54) jedes Fingers (50, 50') einen engeren Radius aufweist als eine nachlaufende Kante (56), wobei die Radien fliessend ineinander übergehen,

17. Fördervorrichtung nach Anspruch 15 oder 16, **dadurch gekennzeichnet, dass** das Sternrad (16) mit einem Fördermittel (24) einer stromab anschliessenden Fördervorrichtung (18) wirkverbunden ist.

## Claims

1. Process by means of which articles which have a collar above their centre of gravity are conveyed with the aid of a circulating endless conveying means, **characterized in that** the articles (14) which are to be transported, at least on an accumulating portion (42) of a conveying path described by the endless conveying means (32, 32', 32'', 32'''), are suspended by at least one side of their collars (20) on the endless conveying means (32, 32', 32'', 32''') and are supported by the latter counter to gravitational force, it being the case that the articles (14) are advanced by the endless conveying means (32, 32', 32'', 32''') on account of the frictional force existing between the endless conveying means (32, 32', 32", 32''') and collar (20), and that the frictional force is such that, in the case of a corresponding resistance acting counter to the transporting direction (T) on an article (14) which is to be transported, the endless conveying means (32, 32', 32'', 32''') slides by under the collar (20) of the article (14) which is to be transported, and that the frictional force between the collar (20) and the endless conveying means (32, 32', 32'', 32''') is set by the selection in particular of an appropriate material for the at least one endless conveying means (32, 32', 32'', 32''') in relation to the material of the collar (20) of the article which is to be transported and/or of a corresponding angle of inclination (β) of the conveying path and/or of a corresponding coating (68, 68') of the at least one endless conveying means (32, 32', 32'', 32''') and/or of the collar (20).

2. Process according to Claim 1, **characterized in that** the articles (14) which are to be transported are transferred to a downstream conveying mechanism (15, 16) or to a further conveying apparatus (18) and, for this purpose, the conveying capacity of the at least one endless conveying means (32, 32', 32'', 32''') is set to be higher than the withdrawal speed at which the articles (14) are withdrawn by the conveying mechanism (15, 16), as a result of which the articles (14) are accumulated in the accumulating portion (42), in the process forming an accumulating path, and are subjected to an accumulating pressure.

3. Process according to Claim 2, **characterized in that** the accumulating pressure or the length of the accumulating path is set by virtue of the speed of the at least one endless conveying means (32, 32', 32'', 32''') being set.

4. Process according to Claim 3, **characterized in that** a differential speed between the withdrawal speed and speed of the at least one endless conveying means (32, 32', 32'', 32''') and/or the length of the accumulating path are regulated with the aid of a regulator circuit (R) and, in particular, the speed of the at least one endless conveying means (32, 32', 32'', 32''') and/or the withdrawal speed and/or the length of the accumulating path are sensed for this purpose.

5. Process according to one of Claims 2 to 4,
**characterized in that**, when the articles (14) which are to be transported are transferred to the downstream conveying mechanism (15, 16) or the further conveying apparatus (18), the articles (14) are subjected to the action of compressed air and their position is thus stabilized.

6. Conveying apparatus which is intended for implementing the process according to Claims 1-5 having a circulating endless conveying means which is driven by drive mechanisms and being intended for conveying articles which have a collar above their centre of gravity, **characterized in that** the endless conveying means (32, 32', 32'', 32''') and the drive mechanism (38, 40, 40', 40''') are co-ordinated with one another so as to prevent the endless conveying means (32, 32', 32", 32''') from sliding on the drive mechanism (38, 40, 40', 40''') under load, and **in that** the articles (14) which are to be conveyed, suspended on at least one side of their collars (20) and supported by the endless conveying means (32, 32', 32'', 32''') counter to gravitational force, can be transported at least in an accumulating portion (42) of a conveying path described by the endless conveying means (32, 32', 32'', 32''') without being subjected to clamping action, it being the case that the articles (14) which are to be transported are advanced on account of the frictional force existing between the collar (20) and endless conveying means (32, 32', 32'', 32'''), and it is possible to set the frictional force, to be precise in particular to the necessary transfer force at which the articles (14) which are to be transported should be transferred to a downstream conveying mechanism (15, 16) or to a further conveying apparatus (18).

7. Conveying apparatus according to Claim 6, **characterized in that,** in order to avoid the endless conveying means (32, 32', 32", 32''') sliding on the drive mechanism (38, 40, 40', 40'''), the endless conveying means (32, 32', 32", 32''') consists of a corresponding material co-ordinated with the material of the drive mechanism (38, 40, 40''') and/or the endless conveying means (32, 32', 32'', 32''') and/or the drive mechanism (38, 40, 40''') have/has a corresponding coating or the endless conveying means (32) provided is a link chain (32') and the drive mechanism (38) provided is a conveying wheel (40') which meshes with the link chain (32').

8. Conveying apparatus according to Claim 6 or 7, **characterized by** the provision, on the side located opposite the endless conveying means (32, 32', 32'', 32'''), of a supporting arrangement (66) which is preferably formed by one or more supporting rails (66') arranged one behind the other and/or by at least one further endless conveying means (32, 32', 32'', 32'''), the endless conveying means (32, 32', 32'', 32''') being designed in a manner analogous to the first endless conveying means (32, 32', 32'', 32''').

9. Conveying apparatus according to Claim 8, **characterized in that** it is possible to adjust the distance between the endless conveying means (32, 32', 32'', 32''') and the supporting arrangement (66), preferably in a variable manner over the conveying path.

10. Conveying apparatus according to Claim 6, **characterized in that** it is possible to set the frictional force between the endless conveying means (32, 32', 32'', 32''') and collar (20) by a corresponding selection of material for the endless conveying means (32, 32', 32'', 32''') and/or by a corresponding angle of inclination (β) for the conveying path and/or by a corresponding coating (68) for the endless conveying means (32, 32', 32'', 32''') and/or for the collar (20).

11. Conveying apparatus according to one of Claims 6 to 10, **characterized in that** it is possible to regulate the speed of the endless conveying means (32, 32', 32'', 32''').

12. Conveying apparatus according to Claim 11, **characterized in that** a regulator circuit (R) is provided for regulating the speed and one or more sensors (S1, S2, S3) is or are provided for sensing at least one of the following parameters: the speed of the at least one endless conveying means (32, 32', 32'', 32''') and/or the withdrawal speed and/or the length of the accumulating path.

13. Conveying apparatus according to one of Claims 6 to 12, **characterized in that** the circulatory plane (36) of the endless conveying means (32, 32', 32'', 32''') and a transporting route (34) described by the transporting path enclose an angle (α) in the range between approximately 0° and 90°.

14. Conveying apparatus according to one of Claims 6 to 13, **characterized by** the provision, in a transfer region (44) in which the articles (14) which are to be transported are transferred to the downstream conveying mechanism (15, 16) or to a further conveying apparatus (18), of means (59) with the aid of which the articles which are to be transported can be stabilized, to be precise preferably by way of compressed air.

15. Conveying apparatus according to one of Claims 6 to 14, **characterized by** the provision, as the further conveying mechanism (15) of the conveying apparatus (12) for cyclic feeding into a downstream conveying apparatus (18), following the transfer region (44), of a star wheel (16) which, for controlled transfer, has two star plates (48, 48') which are spaced apart from one another on a common axis of rotation (58) and act simultaneously on the articles (14) which are to be transported.

16. Conveying apparatus according to Claim 15, **characterized in that** the star plates (48, 48') are provided with circumferentially uniformly distributed, outwardly projecting fingers (50, 50') which are connected to one another via arcuate, pocket-like recesses (52) for accommodating the articles (14) which are to be transported, it being the case that in particular the leading arcuate edge (54) of each finger (50, 50'), this leading edge being oriented in the direction of rotation (R), has a narrower radius than a trailing edge (56), the radii flowing one into the other.

17. Conveying apparatus according to Claim 15 or 16, **characterized in that** the star wheel (16) is operatively connected to a conveying means (24) of a conveying apparatus (18) which follows downstream.

## Revendications

1. Procédé de convoyage, à l'aide d'un moyen de convoyage sans fin accomplissant une révolution, d'objets présentant un col au-dessus de leur centre de gravité, **caractérisé par le fait que** les objets (14) à transporter sont suspendus sur le moyen de convoyage sans fin (32, 32', 32", 32"') par au moins un côté de leurs cols (20), au moins sur une zone d'accumulation (42) d'un trajet de convoyage décrit par ledit moyen de convoyage sans fin (32, 32', 32", 32"'), et sont soutenus par ledit moyen en opposition à la force de gravité, sachant que le moyen de convoyage sans fin (32, 32', 32", 32"') assure une poursuite du mouvement des objets (14) sous l'effet d'une force de frottement s'exerçant entre ledit moyen de convoyage sans fin (32, 32', 32", 32"') et les cols (20), et sachant que ladite force de frottement est ajustée de façon telle qu'en présence d'une résistance correspondante, agissant à l'encontre de la direction de transport (T) sur un objet (14) à transporter, le moyen de convoyage sans fin (32, 32', 32", 32"') ripe au-dessous du col (20) dudit objet (14) à transporter ; et sachant que la force de frottement entre le col (20) et les moyens de convoyage sans fin (32, 32', 32", 32"') est ajustée, en particulier, grâce au choix d'un matériau adéquat destiné au moyen de convoyage sans fin (32, 32', 32", 32"') prévu au minimum, vis-à-vis du matériau du col (20) de l'objet à transporter, et/ou d'un angle d'inclinaison correspondant (β) du trajet de convoyage, et/ou d'un revêtement correspondant (68, 68') du moyen de convoyage sans fin (32, 32', 32", 32"') prévu au minimum, et/ou du col (20).

2. Procédé selon la revendication 1, **caractérisé par le fait que** les objets (14) à transporter sont transférés à un organe de convoyage (15, 16) disposé en aval, ou à un dispositif de convoyage (18) supplémentaire et, à cette fin, la puissance de convoyage du moyen de convoyage sans fin (32, 32', 32", 32"') prévu au minimum est réglée supérieure à la vitesse d'extraction avec laquelle les objets (14) sont extraits par l'organe de convoyage (15, 16), de sorte que lesdits objets (14) sont emmagasinés dans la zone d'accumulation (42), en formant un trajet d'accumulation, et sont sollicités par une pression d'accumulation.

3. Procédé selon la revendication 2, **caractérisé par le fait que** la pression d'accumulation ou la longueur du trajet d'accumulation est réglée par réglage de la vitesse du moyen de convoyage sans fin (32, 32', 32", 32"') prévu au minimum.

4. Procédé selon la revendication 3, **caractérisé par le fait qu'**une vitesse différentielle entre la vitesse d'extraction et la vitesse du moyen de convoyage sans fin (32, 32', 32", 32"') prévu au minimum, et/ou la longueur du trajet d'accumulation, est ajustée à l'aide d'un circuit régulateur (R) et il s'opère notamment, à cet effet, une détection de la vitesse du moyen de convoyage sans fin (32, 32', 32", 32"') prévu au minimum et/ou de la vitesse d'extraction et/ou de la longueur du trajet d'accumulation.

5. Procédé selon l'une des revendications 2 à 4, **caractérisé par le fait que**, lors du transfert des objets (14) à transporter, jusque sur l'organe de convoyage (15, 16) disposé en aval ou jusque sur le dispositif de convoyage (18) supplémentaire, lesdits objets (14) sont sollicités par de l'air comprimé et sont ainsi stabilisés dans leur position.

6. Dispositif de convoyage pour la mise en oeuvre du procédé selon les revendications 1-5, comprenant un moyen de convoyage sans fin accomplissant une révolution et mené, à l'aide d'organes d'entraînement, en vue de convoyer des objets présentant un col au-dessus de leur centre de gravité, **caractérisé par le fait que** le moyen de convoyage sans fin (32, 32', 32", 32"') et l'organe d'entraînement (38, 40, 40', 40"') sont mutuellement coordonnés de manière à empêcher un ripage dudit moyen de convoyage sans fin (32, 32', 32", 32"') sur ledit organe d'entraînement (38, 40, 40', 40"') sous l'effet d'une charge ; et, en conséquence, **par le fait que** les objets (14) à transporter, soutenus par le moyen de convoyage sans fin (32, 32', 32", 32''') en opposition à la force de gravité et en suspension par au moins un côté de leurs cols (20), peuvent être transportés dans au moins une zone d'accumulation (42) d'un trajet de convoyage décrit par le moyen de convoyage sans fin (32, 32', 32", 32"'), sans être soumis à aucun effet de coincement, sachant que la poursuite du mouvement des objets (14) à transporter a lieu sous l'action de la force de frottement s'exerçant entre le col (20) et le moyen de convoyage sans fin (32, 32', 32", 32"'), et que ladite force de frottement est en particulier réglable sur une force de transfert nécessaire par laquelle lesdits objets (14) à transporter doivent être transférés jusque sur un organe de convoyage (15, 16) situé davantage en aval, ou bien jusque sur un dispositif de convoyage (18) supplémentaire.

7. Dispositif de convoyage selon la revendication 6, **caractérisé par le fait que**, en vue d'éviter le ripage du moyen de convoyage sans fin (32, 32', 32", 32"') sur l'organe d'entraînement (38, 40, 40', 40"'), ledit moyen de convoyage sans fin (32, 32', 32", 32"') consiste en un matériau correspondant coordonné avec le matériau dudit organe d'entraînement (38, 40, 40"'), et/ou ledit moyen de convoyage sans fin (32, 32', 32", 32"') et/ou ledit organe d'entraînement (38, 40, 40"') présentent un revêtement correspondant, ou bien une chaîne articulée (32') est prévue en tant que moyen de convoyage sans fin (32) et une roue convoyeuse (40'), en prise d'engrènement avec ladite chaîne articulée (32'), est prévue en tant qu'organe d'entraînement (38).

8. Dispositif de convoyage selon la revendication 6 ou 7, **caractérisé par** la présence, du côté tourné à l'opposé du moyen de convoyage sans fin (32, 32', 32", 32"'), d'un système d'appui (66) matérialisé, de préférence, par un ou plusieurs rail(s) d'appui (66') agencés en succession, et/ou par au moins un moyen supplémentaire de convoyage sans fin (32, 32', 32", 32"'), ledit moyen ou lesdits moyens de convoyage sans fin (32, 32', 32", 32"') étant de réalisation analogue à celle du premier moyen de convoyage sans fin (32, 32', 32", 32"').

9. Dispositif de convoyage selon la revendication 8, **caractérisé par le fait que** la distance comprise entre le moyen de convoyage sans fin (32, 32', 32", 32"') et le système d'appui (66) est réglable, de préférence variable sur le trajet de convoyage.

10. Dispositif de convoyage selon la revendication 6, **caractérisé par le fait que** la force de frottement, entre le moyen de convoyage sans fin (32, 32', 32", 32"') et le col (20), peut être réglée grâce à un choix correspondant du matériau dudit moyen de convoyage sans fin (32, 32', 32", 32"') et/ou grâce à un angle d'inclinaison correspondant (β) du trajet de convoyage, et/ou grâce à un revêtement correspondant (68) dudit moyen de convoyage sans fin (32, 32', 32", 32"') et/ou dudit col (20).

11. Dispositif de convoyage selon l'une des revendications 6 à 10, **caractérisé par le fait que** la vitesse du moyen ou des moyens de convoyage sans fin (32, 32', 32", 32"') peut être régulée.

12. Dispositif de convoyage selon la revendication 11, **caractérisé par** la présence, pour la régulation de la vitesse, d'un circuit régulateur (R) et d'un ou plusieurs capteur(s) (S1, S2, S3) en vue de détecter au moins l'un des paramètres suivants : la vitesse du moyen de convoyage sans fin (32, 32', 32", 32"') prévu au minimum, et/ou la vitesse d'extraction, et/ou la longueur du trajet d'accumulation.

13. Dispositif de convoyage selon l'une des revendications 6 à 12, **caractérisé par le fait que** le plan de révolution (36) du moyen ou des moyens de convoyage sans fin (32, 32', 32", 32"'), et une trajectoire de transport (34) décrite par le trajet de transport, décrivent un angle (α) situé dans la plage comprise entre environ 0° et 90°.

14. Dispositif de convoyage selon l'une des revendications 6 à 13, **caractérisé par** la présence, dans une zone de transfert (44) dans laquelle il est prévu de transférer les objets (14) à transporter jusque sur l'organe de convoyage (15, 16) disposé en aval ou jusque sur un dispositif de convoyage (18) supplémentaire, de moyens (59) à l'aide desquels lesdits objets à transporter peuvent être stabilisés, plus particulièrement, de préférence, par de l'air comprimé.

15. Dispositif de convoyage selon l'une des revendications 6 à 14, **caractérisé par** la présence, en tant qu'organe supplémentaire de convoyage (15) du dispositif de convoyage (12), d'une roue en étoile (16) qui est destinée à l'insertion cadencée dans un dispositif de convoyage (18) situé davantage en aval, se trouve dans la continuité directe de la zone de transfert (44) et comporte, en vue d'un transfert contrôlé, deux disques en étoile (48, 48') agencés à distance mutuelle sur un axe commun de rotation (58) et agissant, en simultanéité, sur les objets (14) à transporter.

16. Dispositif de convoyage selon la revendication 15, **caractérisé par le fait que** les disques en étoile (48, 48') sont pourvus de doigts (50, 50') qui sont répartis uniformément sur le pourtour, font saillie vers l'extérieur et sont reliés mutuellement par des échancrures (52) en arc de cercle, du type poches affectées à la réception des objets (14) à transporter, sachant que notamment le bord d'attaque (54) en arc de cercle de chaque doigt (50, 50'), pointant dans la direction de rotation (R), possède un rayon plus étroit qu'un bord de fuite (56), les rayons fusionnant d'un trait l'un dans l'autre.

17. Dispositif de convoyage selon la revendication 15 ou 16, **caractérisé par le fait que** la roue en étoile (16) est en liaison opérante avec un moyen de convoyage (24) d'un dispositif de convoyage (18) situé dans la continuité directe en aval.
